# EUROPEAN PATENT APPLICATION

(11) **EP 4 589 758 A1**
(43) Date of publication of application: **23.07.2025**
(21) Application number: 23864535.2
(22) Date of filing: 17.08.2023
(51) Int. Cl.: H01M 50/553, H01M 10/613, H01M 10/647, H01M 10/655, H01M 50/103, H01M 50/531, H01M 50/55, H01M 50/507, H01M 50/505, H01M 10/617, H01M 50/244

(54) **POLE, UPPER COVER ASSEMBLY, ELECTRICAL ADAPTER, BATTERY CELL, AND BATTERY PACK**

(30) Priority: 14.09.2022 CN 202211112820; 14.09.2022 CN 202211112800; 14.09.2022 CN 202211112824; 14.09.2022 CN 202222422763 U; 19.11.2022 CN 202223068408 U
(71) Applicant: D-Aus Energy Storage Technology (Xi'an) Co., Ltd, Xi' An, Shaanxi 710075 (CN)
(72) Inventor: LEI, Zhengjun, Shaanxi 710075 (CN); CHEN, Mengqi, Shaanxi 710075 (CN); HAN, Xiaoyu, Shaanxi 710075 (CN); YUAN, Shaowei, Shaanxi 710075 (CN)
(74) Representative: Zacco GmbH
(86) International application number: PCT/CN2023/113497
(87) International publication number: WO 2024/055802

(57) **Abstract**

Provided are a pole, an upper cover assembly, an electrical adapter, a battery cell and a battery pack, mainly solving the problem of heat dissipation of batteries. A through groove is formed in the pole and the electrical adapter so as to mount a heat transfer tube, so that the temperatures of the pole, the electrical adapter and the battery may be effectively controlled after being transferred by the heat transfer tube.

## Description

### Technical Field

The present disclosure relates to the technical field of batteries, in particular to a pole, an upper cover assembly, an electrical adapter, a battery cell and a battery pack.

### Background

At present, power battery industries or energy storage systems have a capacity ranging from several hundred watt hours to several kilowatt hours, and large-scale energy storage systems may even reach megawatt hours. The battery capacity continues to increase, and the corresponding battery loop current is also increasing. A pole of a battery is a main part of the battery for generating heat. At present, the main way to dissipate heat from the battery is to mount a heat dissipation device on a battery shell, but the heat dissipation capability and requirements of the pole are ignored.

A patent with the publication number CN114865151A introduces a high heat dissipation battery pack using aerodynamic energy. The high heat dissipation battery pack includes an integrated shell, a sealing top cover, two electrode poles and a plurality of heat dissipation tubes. A plurality of battery cavities are formed inside the integrated shell, and electrode plate modules are assembled inside the battery cavities; the sealing top cover is fixed at an upper end of the integrated shell; the two electrode poles are fixed at an upper end of the sealing top cover, and the electrode poles are connected to the electrode plate modules; and the plurality of heat dissipation tubes are fixed inside the integrated shell, and both ends of the heat dissipation tubes extend to the outer side of the integrated shell. In this solution, the heat dissipation tubes are placed in the battery shell to improve the heat dissipation design of the battery shell. However, the problem that the pole easily generates heat is still not solved, and the temperature control of the battery cannot be effectively controlled.

### Summary

In order to solve the problem of heat dissipation of battery poles and batteries, some embodiments of the present disclosure are to provide a pole, an upper cover assembly, an electrical adapter, a battery cell and a battery pack.

In order to achieve the above objective, this present disclosure adopts the following technical solutions:
This present disclosure provides a pole arranged on a cover plate of a square battery, the pole is a cylinder, the cylinder includes a side wall, a first end surface and a second end surface, the side wall or the first end surface is at least provided with a through groove to mount a heat transfer tube, and the first end surface is also provided with an electrical connection area.

In an embodiment, the second end surface of the pole is provided with a conductive connection part for electrical connection with an electrode assembly in the square battery.

In an embodiment, the conductive connection part is welded or clamped to the pole.

In an embodiment, the height of the pole is 20-25 mm.

In an embodiment, a distance between the lowest point of the through groove and the second end surface is 7-12 mm.

In an embodiment, a ratio of the diameter of the heat transfer tube to the widest point of the through groove is (1:1.05)-(1:1.1).

In an embodiment, the through groove divides the first end surface into a first area and a second area, the first area is the electrical connection area, and a ratio of an area of the first area to an area of the first end surface is not lower than 50%.

In an embodiment, a cross section of the through groove is C-shaped or U-shaped, and a depth of the through groove is less than the diameter of the heat transfer tube.

In an embodiment, a surface of the through groove is provided with an insulated layer.

This present disclosure provides an upper cover assembly, the upper cover assembly includes a cover plate and also includes two poles according to any one of the above, and the two poles according to any one of the above are arranged on the cover plate in an insulated manner.

In an embodiment, the through groove extends along a width direction of the cover plate, and the ratio of the length of the through groove to a width of the cover plate is (0.7:1)-(0.9:1).

This present disclosure provides a battery cell, comprising the upper cover assembly according to any one of the above.

This present disclosure provides an electrical adapter arranged on a pole of a square battery, the electrical adapter is a cylinder, the cylinder includes a side wall, a first end surface and a second end surface, and the side wall or the first end surface is at least provided with a through groove to mount a heat transfer tube.

In an embodiment, a cross section of the through groove is C-shaped or U-shaped.

In an embodiment, a surface of the through groove is provided with an insulated layer.

In an embodiment, a distance between the lowest point of the through groove and the second end surface is 2-4 mm.

In an embodiment, a ratio of the diameter of the heat transfer tube to the widest point of the through groove is (1:1.05)-(1:1.1).

In an embodiment, the height of the electrical adapter is 11-18 mm.

In an embodiment, the electrical adapter is provided with a fixing hole or a fixing groove at the lowest point of the through groove to fix the electrical adapter on the pole.

In an embodiment, the electrical adapter is also provided with a welding groove and an avoidance groove, the welding groove extends along an axial direction of the lowest point of the through groove, and the avoidance groove is arranged along a circumferential direction of the fixing hole or the fixing groove.

In an embodiment, the electrical adapter is also provided with an extension area extending horizontally along the second end surface.

This present disclosure provides a battery cell, comprising a pole, and the electrical adapter according to any one of the above is fixedly arranged on the pole.

In an embodiment, the second end surface at least covers the pole, the electrical adapter and the pole are fixed by means of welding or screw connection, and the through groove extends along a thickness direction of the battery cell.

This present disclosure provides a battery pack, comprising a plurality of battery cells according to any one of the above, and also comprising the heat transfer tube, the heat transfer tube is fixedly arranged on the through groove, and the heat transfer tube is a heat tube or a liquid cooling tube.

This present disclosure provides an electrical adapter for a battery cell with a plurality of built-in pouch battery cores, the electrical adapter includes a base and a through groove, the base includes a first electrical connection area and a second electrical connection area, the through groove is arranged on the first electrical connection area, the through groove is configured to fix a heat transfer tube, the first electrical connection area is configured to be electrically connected to a tab of a pouch battery core, and the second electrical connection area is configured to be electrically connected to an electrode plate of a battery pack.

In an embodiment, the through groove is convexly arranged on the first electrical connection area, and the tab of the pouch battery core is fixed on a side facing away from the through groove.

In an embodiment, the through groove includes a pair of clamping teeth, an opening is arranged between the pair of clamping teeth, and a cross section of the through groove is C-shaped.

In an embodiment, the pair of clamping teeth is provided with a platform at the opening so that the cross section of the through groove is Ω-shaped.

In an embodiment, the through groove includes a pair of clamping sheets, an end of the pair of clamping sheet close to the base is a clamping area, an end of the pair of clamping sheet away from the base is a locking area, the clamping area is configured to clamp the heat transfer tube, and the locking area is configured to lock and fix the clamping sheet.

In an embodiment, the locking areas of the clamping sheets are fixed by riveting.

In an embodiment, an insulated layer is arranged in the through groove.

This present disclosure provides a battery cell, the battery cell includes a plurality of pouch battery cores, and each tab of each of the plurality of pouch battery cores is electrically connected to an electrical adapter according to any one of the above correspondingly.

This present disclosure provides a battery pack, the battery pack includes a plurality of the above battery cells, and also includes a temperature control assembly, a positive plate and a negative plate, and the tab is electrically connected to the first electrical connection area of the electrical adapter; the temperature control assembly includes a heat transfer tube, and the heat transfer tube is fixed on the through groove; and the positive plate and the negative plate are fixedly arranged on two sides of the battery pack, the second electrical connection area of the electrical adapter is electrically connected to the positive plate or the negative plate, and the heat transfer tube is a heat tube or a liquid cooling tube.

This present disclosure provides an electrical adapter, including a conductive block; and a top end of the conductive block is provided with at least one through groove, the at least one through groove is configured to mount a heat transfer tube, the heat transfer tube is a heat tube, the top end or a side surface of the conductive block is provided with a clamping groove, and the clamping groove is configured to mount an explosion venting plate.

In an embodiment, a bottom end of the conductive block is provided with a pole mounting groove, the pole mounting groove is configured to cooperate with a pole of a square battery, the top end of the conductive block is also provided with a welding groove, and the welding groove is configured to be welded to the pole of the square battery.

In an embodiment, the through groove is an arc-shaped groove or an arch-shaped groove, configured to achieve close contact between the conductive block and the heat tube.

In an embodiment, an end of the conductive block away from the clamping groove is provided with a mounting block, and the mounting block is configured to facilitate electrical connection of the conductive block.

This present disclosure provides an upper cover assembly, including a cover plate, a positive pole and a negative pole, the cover plate is provided with an explosion venting port, an explosion venting film is arranged in the explosion venting port, the upper cover assembly also includes two electrical adapters according to any one of the above, and the two electrical adapters are respectively integrated with the positive pole and the negative pole.

This present disclosure provides a battery pack, including an explosion venting plate, two conductive plates, N square batteries and 2N electrical adapters according to any one of the above, wherein N is an integer greater than or equal to 2; the N square batteries are sequentially arranged, positive poles of the N square batteries are located on a first side of the N square batteries, and negative poles of the N square batteries are located on a second side of the N square batteries; N conductive blocks are sequentially arranged on the first side of the N square batteries, the conductive blocks are electrically connected to the positive poles of the N square batteries respectively, the other N conductive blocks are sequentially arranged on the second side of the N square batteries, and the N conductive blocks are electrically connected to the negative poles of the N square batteries respectively; the two conductive plates are electrically connected to the N conductive blocks on the first side of the N square batteries and the N conductive blocks on the second side of the square batteries respectively, so that the N square batteries are connected in parallel through the two conductive plates; through grooves of the N conductive blocks sequentially communicate with each other and are provided with at least one heat tube; and the explosion venting plate is inserted into clamping grooves of the 2N conductive blocks to form an explosion venting channel together with side walls of the 2N conductive blocks and cover plates of the N square batteries, and the explosion venting channel communicates with explosion venting ports of the N square batteries.

In an embodiment, the conductive blocks are electrically connected to the positive poles and negative poles of the square batteries by welding, and the conductive plates are electrically connected to the conductive blocks or mounting blocks through bolts.

This present disclosure provides a battery pack, including an explosion venting plate, N-1 conductive plates, N square batteries and 2N electrical adapters according to any one of the above, wherein N is an integer greater than or equal to 2; the plurality of square batteries are sequentially arranged, a positive pole of the i^{th} square battery is located on a first side, a negative pole of the i^{th} square battery is located on a second side, a negative pole of the i+1^{th} square battery is located on the first side, a positive pole of the i+1^{th} square battery is located on the second side, and i is a positive integer less than N; N conductive blocks are sequentially arranged on the first side of the N square batteries, the N conductive blocks are electrically connected to the positive poles or the negative poles of the N square batteries respectively, the other N conductive blocks are sequentially arranged on the second side of the N square batteries, and the N conductive blocks are electrically connected to the negative poles or the positive poles of the N square batteries respectively; contact surfaces of adjacent conductive blocks are insulated, and the N square batteries are connected in series through the N-1 conductive plates between the 2N conductive blocks; through grooves of the N conductive blocks sequentially communicate with each other and are provided with at least one heat tube, and an outer wall of the heat tube is provided with an insulated layer; and the explosion venting plate is inserted into clamping grooves of the 2N conductive blocks to form an explosion venting channel together with side walls of the 2N conductive blocks and cover plates of the square batteries, and the explosion venting channel communicates with explosion venting ports of the square batteries.

In an embodiment, the explosion venting plate is a U-shaped explosion venting plate or a flat explosion venting plate, a side wall of the U-shaped explosion venting plate is respectively embedded in clamping grooves at top ends of the conductive blocks on the first side of the N square batteries and the conductive blocks on the second side of the N square batteries to form an explosion venting channel, or the flat explosion venting plate is respectively embedded in clamping grooves on side walls of the conductive blocks on the first side of the N square batteries and the conductive blocks on the second side of the N square batteries to form an explosion venting channel, the conductive blocks are electrically connected to the positive poles and negative poles of the square batteries by welding, and the conductive plates are electrically connected to the conductive blocks or mounting blocks through bolts.

This present disclosure provides an electrical adapter, including a busbar and a pole; the busbar is provided with a plurality of first slots used for a tab of each pouch battery core in a battery pack to pass through and electrically connected to the busbar after contact; and the pole is arranged on an end surface of the busbar (the end surface is the surface of the busbar away from the battery pack) and is integrated with the busbar. The busbar and pole of the above electrical adapter are of an integrated structure, so that a plurality of pouch battery cores may be connected in parallel through one component, thereby solving the problems of low reliability and high contact resistance when existing battery packs are connected in parallel through a plurality of components. Furthermore, the above pole is provided with a through groove, the through groove may be located on a side surface or a top surface of the pole, the communicated direction is parallel to the direction of arrangement of a plurality of first slots, a heat transfer tube (the heat transfer tube is a heat tube or a liquid cooling tube) may be arranged in the through groove, and the heat generated by the battery pack and the busbar is transferred into the heat transfer tube in the through groove in time through the pole and is delivered through the heat tube, thereby avoiding the concentration of heat in the battery, and also avoiding the too high temperature of the pouch battery core, which may affect the normal operation of the pouch battery core.

In an embodiment, the above first slot is an open slot, that is, one side of the first slot communicates with the busbar, so that when a tab is mounted, the tab may be inserted from one side of the busbar. Compared to the bottom-up insertion manner, side insertion is more convenient and quick and improves the mounting and disassembling efficiency.

In an embodiment, the plurality of first slots are arranged in parallel in a first area of the busbar, and the pole is arranged in a second area of the busbar; and the first area and the second area are two areas distributed along a length direction of the busbar, or the first area and the second area are two areas distributed along a width direction of the busbar. By arranging the first slots and the pole in different areas, the busbar may be provided with more first slots in a limited area, and then, more pouch battery cores may be connected in parallel, thereby meeting the requirement of improving the battery capacity, and also achieving the purpose of saving the space. Furthermore, the heat generated by the battery pack and the busbar may be efficiently transferred to the pole for centralized processing.

This present disclosure also provides an upper cover assembly, including a cover plate and two electrical adapters for battery packs; the cover plate is provided with at least two through holes; and poles of the two electrical adapters pass through the at least two through holes, and the cover plate and the two electrical adapters are arranged in an insulated manner.

In an embodiment, the above upper cover assembly also includes an insulated support arranged between the busbar and the battery pack, and the insulated support is provided with a plurality of second slots for the tab of each pouch battery core in the battery pack to pass through. The insulated support may provide a reliable support for electrical connection between the tab and the busbar to prevent the contact between the busbar and a pouch battery core shell, and may further limit the movement and deformation of the tab to avoid weld cracking and detachment of the tab caused by vibration and deformation.

In an embodiment, insulated clamping plates are arranged between the cover plate and the busbar, the insulated clamping plates are provided with positioning columns, and the insulated support is provided with positioning holes cooperating with the positioning columns. The insulated support and the insulated clamping plates make the assembly of the entire cover plate more accurate and reliable through the cooperation between the positioning columns and the positioning holes.

In an embodiment, a sealing rubber ring is arranged in the through hole of the cover plate and is configured to seal the joint between the pole and the cover plate.

In an embodiment, the pole is also sleeved with a welding ring on an outer side of the cover plate, the welding ring is welded to the pole, and simultaneously, the sealing rubber ring is tightly pressed.

This present disclosure also provides a battery pack, including a plurality of pouch battery cores and the above upper cover assembly. Positive tabs and negative tabs of the plurality of pouch battery cores respectively pass through first slots of two busbars and then are bent, and are welded to the busbars.

Compared with the prior art, this present disclosureis provided with the following beneficial effects:
1. In this present disclosure, by arranging the through groove on the pole and placing the heat transfer tube in the through groove, the temperature of the pole may be effectively controlled. The pole is also connected to the copper foil and aluminum foil of the positive and negative electrodes of the battery through metallic conductive connection plates, so that the temperature of the pole is controlled, and simultaneously, the internal temperature of the battery is also effectively controlled. In an embodiment, the first end surface of the pole is provided with an electrical connection area, so that an electrode plate may be mounted on the electrical connection area to achieve serial connection or parallel connection of a plurality of battery cells. This present disclosure is simple in structure, strong in practicability and easy to operate, may balance the heat of the battery pack, has a good heat dissipation effect, and has low cost.
2. In this present disclosure, by arranging the electrical adapter with the through groove on the pole and placing the heat transfer tube in the through groove, the temperatures of the pole and the battery may be effectively controlled after being transferred by the heat transfer tube. In an embodiment, the first end surface or the extension area of the electrical adapter is provided with an electrical connection area, so that an electrode plate of the battery pack may be mounted on the electrical connection area to achieve serial connection or parallel connection of a plurality of battery cells. This present disclosure is simple in structure, strong in practicability and easy to operate, may balance the heat of the battery pack, has good heat transfer and heat dissipation effects, and has low cost.
3. In this present disclosure, by arranging the electrical adapter with the through groove and the base, a first electrical connection area and a second electrical connection area are arranged on the base, so that the busbar may simultaneously connect the tab of the pouch battery core and the electrode plate of battery pack. The through groove is arranged on the first electrical connection area, the first electrical connection area is directly fixed to the tab of the battery core, the heat dissipated by the tab is directly transferred to the heat tube on the through groove, and further, the heat is transferred to an external temperature control device through the heat tube to balance and control the heat of the battery pack. The device has a simple structure, a good heat dissipation effect and low cost.
4. In this present disclosure, the electrical adapter includes a conductive block. The top end of the conductive block is provided with at least one through groove, the through groove is configured to mount a heat tube, the top end or the side surface of the conductive block is provided with a clamping groove, and the clamping groove is configured to mount an explosion venting plate. The electrical adapter has a simple structure. A plurality of square batteries may be connected in series or parallel by only arranging the electrical adapter. Simultaneously, during the charging and discharging processes of the square battery, the temperature of the joint between poles is the highest. Based on this, the conductive block is provided with a through groove, a heat tube may be mounted in the through groove, and thus, the heat of the battery pole may be taken away to keep the temperature of the battery within the optimal range. In addition, the electrical adapter is also provided with a clamping groove, and the clamping groove and the explosion venting plate may form an explosion venting channel to achieve directional discharge of thermal runaway fumes. By the above structure, the electrical adapter has multiple functions such as electric conduction, heat transfer and directional fume discharge and thus is widely applied.
5. In this present disclosure, the busbar and the pole in the electrical adapter are integrated, so that a plurality of pouch battery cores may achieve current convergence and extraction through one electrical adapter. This manner not only improves the reliability when a plurality of pouch battery cores are electrically connected, but also reduces the contact resistance when a plurality of components are electrically connected, thereby improving the performance of the battery. In addition, the electrical connection is achieved through one electrical adapter, so that mounting components of the battery pack are reduced, and the mounting process is simplified. Furthermore, the above pole is provided with a through groove, the through groove may be located on a side surface or a top surface of the pole, the communicated direction is parallel to the direction of arrangement of a plurality of first slots, a heat transfer tube (the heat transfer tube is a heat tube or a liquid cooling tube) may be arranged in the through groove, and the heat generated by the battery pack and the busbar is transferred into the heat transfer tube in the through groove in time through the pole and is delivered through the heat tube, thereby avoiding the concentration of heat in the battery, and also avoiding the too high temperature of the pouch battery core, which may affect the normal operation of the pouch battery core.

### Brief Description of the Drawings

Fig. 1 is a schematic structural diagram of a pole in Embodiment 1;
Fig. 2 shows schematic structural diagrams after multiple poles and conductive connection parts are fixed in Embodiment 1;
Fig. 3 shows schematic diagrams of size definition of the pole in Embodiment 1;
Fig. 4 is a schematic structural diagram of an upper cover assembly in Embodiment 2;
Fig. 5 is a schematic diagram of size definition of the upper cover assembly in Embodiment 2;
Fig. 6 is a schematic structural diagram of a battery cell in Embodiment 3;
Fig. 7 is a schematic structural diagram of a battery pack in Embodiment 4;
Fig. 8 is a schematic structural diagram after assembly of an electrical adapter and a battery pole in Embodiment 5;
Fig. 9 shows schematic structural diagrams of multiple electrical adapters in Embodiment 5;
Fig. 10 shows schematic diagrams of size definition of the electrical adapter in Embodiment 5;
Fig. 11 is a first schematic structural diagram of the electrical adapter and an extension area thereof in Embodiment 5;
Fig. 12 is a top view of the electrical adapter and the extension area thereof in Embodiment 5;
Fig. 13 is a second schematic structural diagram of the electrical adapter and the extension area thereof in Embodiment 5;
Fig. 14 is a schematic structural diagram of an upper cover assembly in Embodiment 6;
Fig. 15 is a schematic diagram of size definition of an upper cover assembly in Embodiment 7;
Fig. 16 is a schematic structural diagram of a battery cell in Embodiment 7;
Fig. 17 is a schematic structural diagram of a battery pack in Embodiment 8;
Fig. 18 is a schematic structural diagram of an electrical adapter in Embodiment 9;
Fig. 19 is a schematic structural diagram of the electrical adapter in Embodiment 9;
Fig. 20 is a schematic structural diagram of the electrical adapter in Embodiment 9;
Fig. 21 is a schematic structural diagram of an electrical adapter in Embodiment 10;
Fig. 22 is a schematic structural diagram of the electrical adapter in Embodiment 10;
Fig. 23 is a schematic structural diagram of a battery cell in Embodiment 11;
Fig. 24 is a schematic structural diagram of the battery cell in Embodiment 11;
Fig. 25 is a schematic structural diagram of a battery pack in Embodiment 12;
Fig. 26 is a schematic structural diagram of the battery pack in Embodiment 12;
Fig. 27 is a first schematic structural diagram of an electrical adapter in Embodiment 13 of this present disclosure;
Fig. 28 is a second schematic structural diagram of the electrical adapter in Embodiment 13 of this present disclosure;
Fig. 29 is a third schematic structural diagram of the electrical adapter in Embodiment 13 of this present disclosure;
Fig. 30 is a fourth schematic structural diagram of the electrical adapter in Embodiment 13 of this present disclosure;
Fig. 31 is a schematic structural diagram of an existing square battery;
Fig. 32 is a schematic structural diagram of an upper cover assembly in Embodiment 14 of this present disclosure;
Fig. 33 is a first schematic structural diagram of a battery pack in Embodiment 15 of this present disclosure;
Fig. 34 is a second schematic structural diagram of the battery pack in Embodiment 15 of this present disclosure;
Fig. 35 is a schematic structural diagram of a battery pack in Embodiment 16 of this present disclosure;
Fig. 36 is a schematic structural diagram of an electrical adapter in Embodiment 17 of this present disclosure;
Fig. 37 is a schematic structural diagram of an electrical adapter in Embodiment 18 of this present disclosure;
Fig. 38 is a schematic structural diagram of an upper cover assembly in Embodiment 19 of this present disclosure;
Fig. 39 is a first schematic structural diagram of a battery pack in Embodiment 20 of this present disclosure; and
Fig. 40 is a second schematic structural diagram of the battery pack in Embodiment 20 of this present disclosure.

Reference numerals: 11-pole, 110-battery cell, 111-first end surface, 112-second end surface, 113-side wall, 12-through groove, 13-conductive connection part, 141-cover plate, 142-first insulated part, 143-second insulated part, 145-explosion venting port, 146-liquid injection port, 151-positive plate, 152-negative plate, 16-heat transfer tube, 1101-upper cover assembly, 1102-battery barrel, 1111-first area, 1112-second area, 21-electrical adapter, 22-through groove, 26-heat transfer tube, 27-temperature control assembly, 220-upper cover assembly, 200-battery cell, 210-pole, 211-first end surface, 212-second end surface, 213-side wall, 2101-conductive connection part, 2111-first area, 2112-second area, 221-fixing hole, 222-welding groove, 223-avoidance groove, 224-extension area, 225-fixing edge, 226-accommodating groove, 241-cover plate, 242-first insulated part, 243-second insulated part, 2441-positive pole, 2442-negative pole, 245-explosion venting port, 246-liquid injection port, 251-positive plate, 252-negative plate, 31-base, 310-electrical adapter, 311-first electrical connection area, 312-second electrical connection area, 32-through groove, 321-clamping tooth, 3211-platform, 322-clamping sheet, 3221-clamping area, 3222-locking area, 320-battery shell, 3201-insulated gasket, 3202-first mounting position, 3203-second mounting position, 301-electrode plate, 302-first mounting part, 303-second mounting part, 304-support part, 41-conductive block, 42-square battery, 43-conductive plate, 44-heat tube, 45-explosion venting plate, 46-explosion venting channel, 411-pole mounting groove, 412-through groove, 413-clamping groove, 414-mounting block, 415-mounting hole, 416-welding groove, 421-pole, 422-cover plate, 423-explosion venting film, 4211-positive pole, 4212-negative pole, 51-electrical adapter, 52-cover plate, 53-insulated support, 54-insulated clamping plate, 55-sealing rubber ring, 56-welding ring, 57-pouch battery core, 58-heat transfer tube, 511-busbar, 512-pole, 513-first slot, 514-through groove, 515-first area, 516-second area, 521-through hole, 531-second slot, 532-positioning hole, 541-positioning column, 571-tab.

### Detailed Description of the Embodiments

In order to make the objectives, technical solutions and advantages of this present disclosure more clear, this present disclosure will be further described in detail below with reference to accompanying drawings and embodiments. It should be understood that the specific embodiments described herein are only used to explain this present disclosure and are not intended to limit this present disclosure.

### Embodiment 1

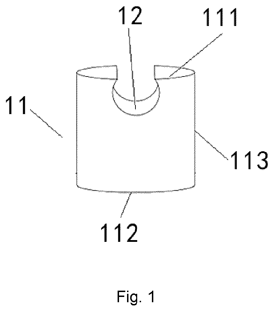

Fig. 1 is a schematic structural diagram of a pole provided in this embodiment. In this embodiment, a pole 11 is a cylinder, the cylinder includes a first end surface 111, a second end surface 112 and a side wall 113, and the first end surface 111 or the side wall 113 is at least provided with one through groove 12 to mount a heat transfer tube, that is, an opening of the through groove 12 is located on the first end surface 111 or the side wall 113. The first end surface 111 is provided with an electrical connection area, and the second end surface 112 is configured to provide a conductive connection part for electrical connection with an electrode assembly in a battery shell.

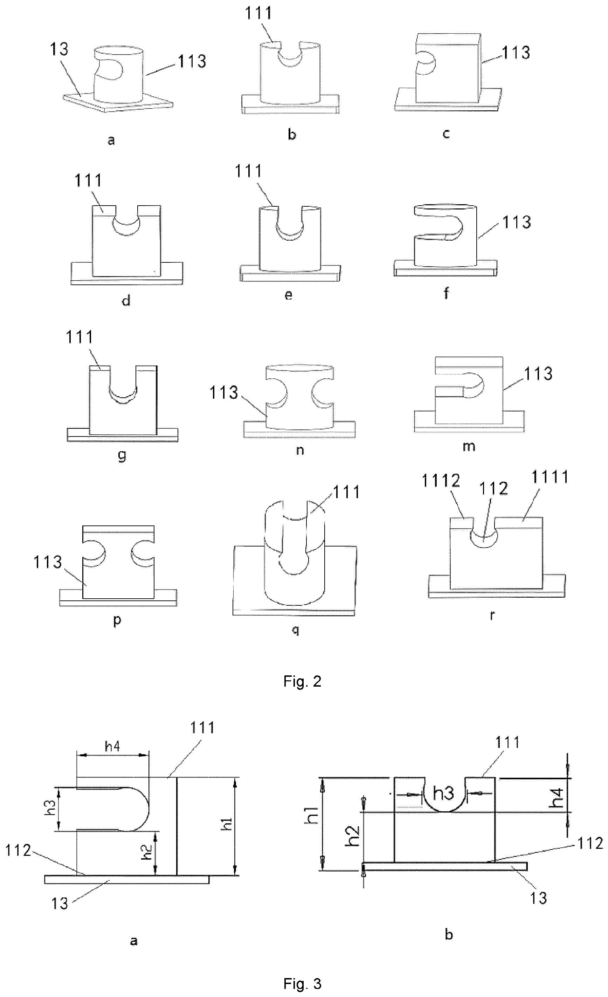

Fig. 2 shows schematic structural diagrams after multiple structures of poles and conductive connection parts are connected in this embodiment. As shown in diagrams a and b in Fig. 3, the height of the pole is h1, the distance between the lowest point of the through groove and the second end surface 112 is h2, the widest point of the through groove is h3, and the depth of the through groove is h4. In some embodiments, the cross section of the through groove 12 is C-shaped or U-shaped. As shown in diagrams a, b, c, d, n, p, q and r in Fig. 2, the cross section of the through groove is C-shaped, and the opening width is less than the widest point h3 of the through groove. This design is favorable for interference clamping of the heat transfer tube in the through groove 12. The radians formed at two ends of the C-shaped through groove have natural tension, which is favorable for tightly clamping the heat transfer tube in the through groove. As shown in diagrams e, f, g and m in Fig. 2, the cross section of the through groove is U-shaped, and the opening width is slightly less than the widest point h3 of the through groove. This design is convenient for placing the heat transfer tube, and may provide a sufficient operating space for special tools to flatten the heat transfer tube or more tightly attach the heat transfer tube to the through groove.

In this embodiment, as shown in diagrams a and b in Fig. 3, a conductive connection part 13 is specifically a conductive connection plate with a thickness of 2-3 mm and a rectangular shape, and different shapes may also be set according to different needs. The conductive connection parts of the positive pole and the negative pole are made of different materials. In an embodiment, the positive pole is made of an aluminum sheet, and the negative pole is made of a copper sheet. If the pole is made of an aluminum material, the conductive connection part 13 and the positive pole may be integrally formed, and the conductive connection part 13 and the negative pole may be fixed by welding or clamping. The specific fixing manner varies according to different materials selected for the pole or the conductive connection plate. A layer of copper sheet may be added to the integrally formed pole and conductive connection plate made of an aluminum material as a conductive connection plate of the negative pole.

As shown in diagrams b, d, e, g and q in Fig. 2, the through groove 12 may be arranged on the first end surface 111 of the pole. At this time, except for the gap at the opening of the through groove, the first end surface 111 is completely used as an electrical connection area for connection with an electrode plate. As shown in diagrams a, c, f and m in Fig. 2, the through groove 12 may be arranged on the side wall 113 of the pole. At this time, the first end surface 111 is completely used as an electrical connection area for connection with an electrode plate. As shown in diagrams n and p in Fig. 2, when the opening of the through groove 12 is located on the side wall 113, two through grooves may be arranged on two opposite sides of the pole simultaneously, so as to increase the placing number of heat transfer tubes and improve the heat transfer efficiency of the pole.

The area of the electrical connection area is too small, which reduces the current carrying area of the pole and increases the temperature of the pole. In some embodiments, in order to increase the area of the electrical connection area, the through groove 12 is eccentrically arranged. As shown in the diagram r in Fig. 2, the through groove 12 divides the first end surface into a first area 1111 and a second area 1112, the first area 1111 is an electrical connection area, and the area of the first area 1111 accounts for not less than 50% of the area of the first end surface. This design may effectively increase the area of the electrical connection area and increase the current carrying area. It should be noted that the area of the first end surface includes the missing area due to the opening of the through groove, that is, the area of the first end surface is equivalent to the area of the second end surface.

As shown in diagrams a, c, q and r in Fig. 2, the horizontal cross section of the pole 11 may be circular, rectangular or track-shaped, poles of different shapes may be selected according to different battery models, and other shapes may also be used. This embodiment will not be exhaustive.

As shown in diagrams a and b in Fig. 3, the second end surface 112 of the pole is close to the electrode assembly, so the second end surface 112 is closer to the electrode assembly inside the battery, and the heat transfer tube should be arranged as close as possible to the second end surface 112. In order to adapt to most square batteries commonly used on the market, in this embodiment, the height h1 of the pole is 20-25 mm, and the distance h2 between the lowest point of the through groove and the second end surface 112 of the pole is 7-12 mm. This arrangement may make the heat transfer tube as close as possible to the inside of the battery for heat transfer. When the diameter of the heat transfer tube is excessively less than that of the through groove, the contact is not tight. When the diameter of the heat transfer tube is excessively greater than that of the through groove, the heat transfer tube is deformed. Therefore, a ratio of the diameter of the heat transfer tube to the widest point h3 of the through groove is (1:1.05)-(1:1.1). In an embodiment, the diameter of the heat transfer tube is φ10, the size of the diameter is 10 mm, and the widest point h3 of the through groove is 10.5-11 mm, so that the heat transfer tube may be conveniently placed in the through groove and then tightly pressed and closely attached to the through groove to improve the heat transfer efficiency.

In some embodiments, as shown in the diagram b in Fig. 3, the depth h4 of the through groove is less than the diameter of the heat transfer tube, so that the heat transfer tube slightly protrudes out of the surface of the pole, which is favorable for tightly pressing and flattening the heat transfer tube to enable the heat transfer tube to be in close contact with the through groove.

In some embodiments, the surface of the through groove 12 is provided with an insulated layer which may be coated with an insulated material or pasted with a silicone layer, a rubber layer and the like, or an insulated layer may be arranged on the heat transfer tube to enable the heat transfer tube made of a metal material and the pole to be mounted in an insulated manner.

In this present disclosure, by arranging the through groove on the pole and placing the heat transfer tube in the through groove, the temperature inside the pole and the battery may be effectively controlled. In an embodiment, the first end surface of the pole is provided with an electrical connection area, so that an electrode plate may be mounted on the electrical connection area to achieve serial connection or parallel connection of a plurality of battery cells. This present disclosure is simple in structure, strong in practicability and easy to operate, is able to balance the heat of the battery pack, has a good heat dissipation effect, and has low cost.

### Embodiment 2

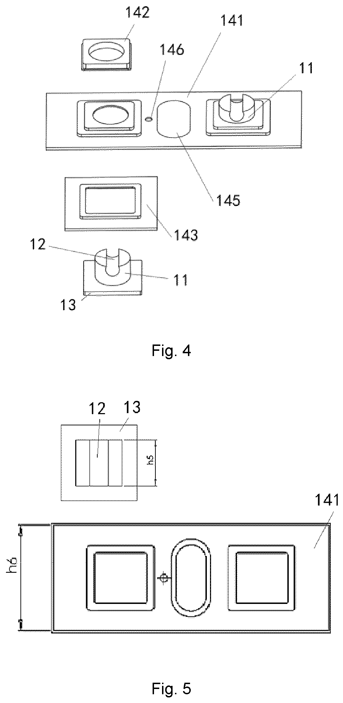

Fig. 4 is a schematic structural diagram of an upper cover assembly. The upper cover assembly includes a cover plate 141, a first insulated part 142, a second insulated part 143 and two poles 11 which are respectively a positive pole and a negative pole. The first insulated part 142 is arranged above the cover plate 141, the second insulated part 143 is arranged below the cover plate 141, and the poles 11 sequentially pass through the second insulated part 143, the cover plate 141 and the first insulated part 142 and then are fixed on the cover plate 141 to place heat tubes in through grooves of the poles. The cover plate 141 is also provided with an explosion venting port 145 and a liquid injection port 146.

As shown in Fig. 1, in this embodiment, the pole 11 is a cylinder, the cylinder includes a first end surface 111, a second end surface 112 and a side wall 113, and the first end surface 111 or the side wall 113 is at least provided with one through groove 12 to mount a heat transfer tube, that is, an opening of the through groove 12 is located on the first end surface 111 or the side wall 113. The first end surface 111 is provided with an electrical connection area, and the second end surface 112 is configured to provide a conductive connection part for electrical connection with an electrode assembly in a battery shell. Fig. 2 shows schematic structural diagrams after multiple structures of poles and conductive connection parts are connected in this embodiment, wherein the specific structure of the pole and the specific limitation of the through groove are detailed in Embodiment 1.

Fig. 5 is a top view of a cover plate and a pole, wherein the ratio of the length h5 of the through groove to the width h6 of the cover plate is (0.7:1)-(0.9:1). A width direction of the cover plate 141 is an extension direction of the through groove 12, which is favorable for fixing a heat transfer tube on a set of poles 11 when a plurality of battery cells are connected in parallel. The ratio of the length of the through groove 12 to the width of the cover plate is (0.7:1)-(0.9:1), which is favorable for increasing the contact area between the heat transfer tube and the through groove 12, and enhancing the heat transfer effect.

### Embodiment 3

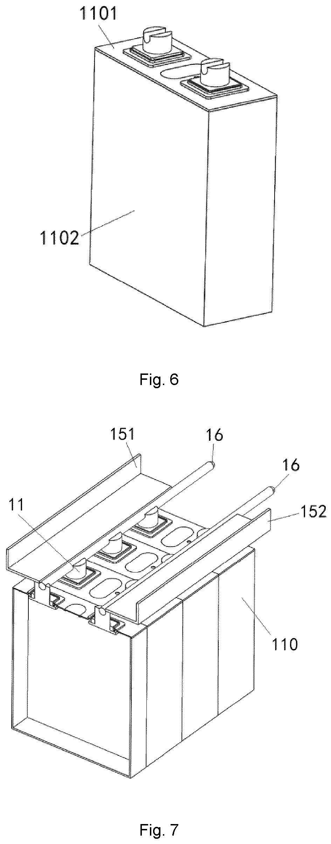

Fig. 6 is a schematic structural diagram of a battery cell, including an upper cover assembly 1101, a battery barrel 1102 and an electrode assembly (not shown in the figure) described in Embodiment 2.

### Embodiment 4

Fig. 7 is a schematic structural diagram of a battery pack, including a plurality of battery cells 110 described in Embodiment 3 and a positive plate 151 and a negative plate 152 which are fixed on the poles 11, and also including heat transfer tubes 16 fixed on the poles 11. In this embodiment, a plurality of battery cells are connected in parallel. Battery packs may also be connected in series, but corresponding improvements need to be made to the positive plate and the negative plate to connect the battery cells in series and insulate the grooves or the heat transfer tubes. In this embodiment, the heat transfer tube 16 is a heat tube or a liquid cooling tube. When the heat tube is used, a temperature control assembly is additionally arranged on the battery pack so as to transfer the heat of the heat tube to the temperature control assembly. When the liquid cooling tube is used, an external water cooler is additionally arranged so as to achieve temperature control of the battery pack by the water cooler.

The following is a summary analysis of performance parameters of the battery pack using the pole provided in this present disclosure at 20±5°C during battery charging and discharging processes after cooling with a heat tube and a TEC refrigerator:
A shown in Table 1, with reference to diagrams a and b in Fig. 3, the part marked with h2 is a combined plastic sealing area between the pole and the cover plate, and the part marked with h4 is a placement position of the heat transfer tube. After the heat transfer tube is placed, the temperatures of the battery and the pole are tested by a temperature tester. It is found that with the change of the values of h2 and h4, the temperatures of the pole of the battery and the shell change accordingly. When h2 is less than 7 mm, after the pole and the upper cover assembly are assembled, the space for mounting the heat transfer tube is insufficient, so it is not considered. When h2 is greater than 13 mm, although the temperature of the pole decreases compared to when the pole of this present disclosure is not used, the temperature of the battery no longer continues to decrease. As the value of h2 increases, within the range of 7-12 mm, the temperature of the pole is not higher than 34°C, and the temperature measured on the surface of the battery shell is also about 36°C. For overall temperature control, compared to conventional pole batteries on the market without using the poles of this present disclosure, the temperature of the pole is reduced by at least 18.9%, and the surface temperature of the battery shell is reduced by at least 4.7%, thereby effectively reducing the overall temperature of the battery, significantly reducing the temperature of the pole, and greatly improving the safety performance.

**Table 1 Surface temperature of battery pole and battery shell under different sizes of through grooves**

| h2 height (mm) | Comparative Example | 7 | 8 | 9 | 10 | 11 | 12 | 13 | 14 |
|---|---|---|---|---|---|---|---|---|---|
| | Conventional pole on the market | | | | | | | | |
| Surface temperature of pole (°C) | 42 | 29.3 | 30.8 | 31.8 | 32.5 | 33.2 | 33.9 | 35.1 | 36.4 |
| Surface temperature of battery shell (°C) | 38 | 33.9 | 34.2 | 34.6 | 35.1 | 35.6 | 36.2 | 36.4 | 36.6 |

**Table 2 Surface temperature of battery pole under different sizes of through grooves**

| | | | | | | |
|---|---|---|---|---|---|---|
| h5:h6 | Comparative Example | 0.5:1 | 0.6:1 | 0.7:1 | 0.8:1 | 0.9:1 |
| Temperature of pole (°C) | 42 | 33.5 | 32.6 | 31.1 | 30.4 | 29.8 |

As shown in Table 2, with reference to Fig. 5, the ratio of the length h5 of the through groove to the width h6 of the cover plate has a significant impact on the temperature of the battery pole. When h2 is fixed at 7 mm, the larger the attaching area between the heat transfer tube and the pole, the better the heat transfer and heat dissipation effects, but the maximum length should not exceed the width of the cover plate. After testing the temperatures of the poles during 1C charging and discharging of batteries for different lengths of through grooves, compared to the poles of conventional batteries on the market without using the poles of this present disclosure, it can be seen that the surface temperature of the pole is reduced by at least 20.2%. In this present disclosure, the temperature of the pole is significantly reduced, the safety performance is greatly improved, the ratio of the length h5 of the through groove to the width h6 of the cover plate is preferably (0.7:1)-(0.9:1), the cooling effect is good, the energy is saved, and the environment is protected.

### Embodiment 5

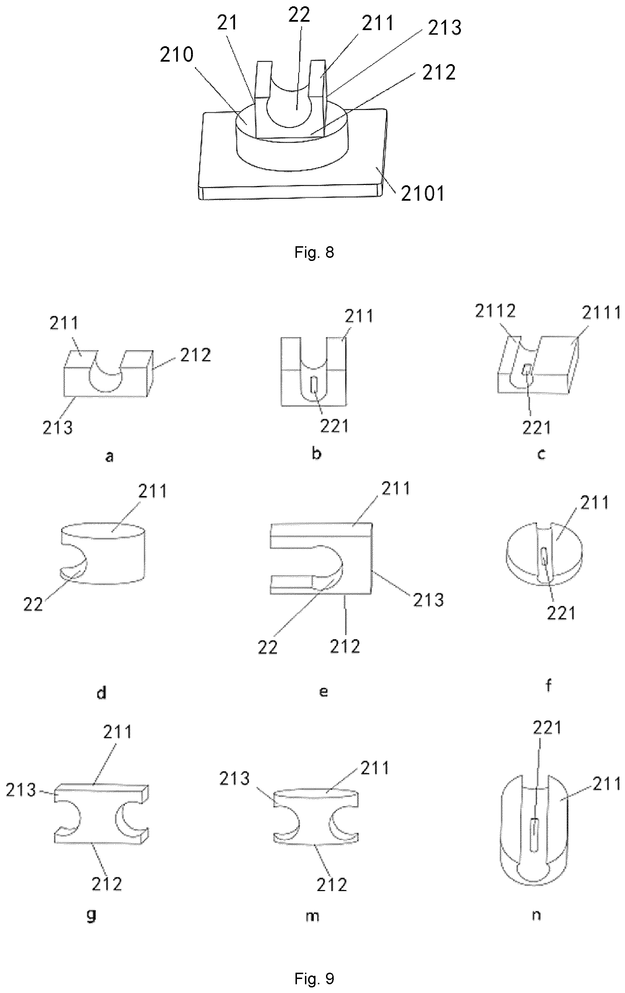

Fig. 8 is a schematic structural diagram after assembly of an electrical adapter and a battery pole provided in this embodiment. In this embodiment, an electrical adapter 21 is a cylinder, the cylinder includes a first end surface 211, a second end surface 212 and a side wall 213, and the first end surface 211 or the side wall 213 is at least provided with one through groove 22 to mount a heat transfer tube, that is, an opening of the through groove 22 is located on the first end surface 211 or the side wall 213. The second end surface 212 is configured to be fixedly connected to a pole 210, and the pole 210 is also provided with a conductive connection part 2101 for electrical connection with an electrode assembly in a battery shell.

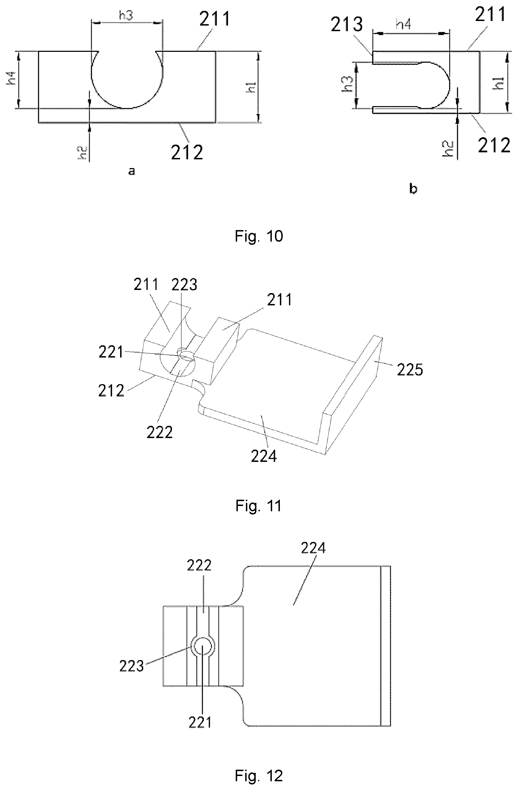

Fig. 9 shows schematic structural diagrams of multiple structures of electrical adapters 21 in this embodiment. As shown in Fig. 10, the height of the electrical adapter is h1, the distance between the lowest point of the through groove 22 and the second end surface 212 is h2, the widest point of the through groove is h3, and the depth of the through groove is h4. In some embodiments, the cross section of the through groove 22 is C-shaped or U-shaped. As shown in diagrams a, c, d, f and n in Fig. 9, the cross section of the through groove is C-shaped, and the opening width is less than the widest point h3 of the through groove. This design is favorable for interference clamping of the heat transfer tube in the through groove 22. Moreover, the radians formed at two open ends of the C-shaped through groove have natural tension, which is favorable for tightly clamping the heat transfer tube in the through groove. As shown in diagrams b and e in Fig. 9, the opening of the through groove with a U-shaped cross section is slightly less than the widest point h3. This design is convenient for placing the heat transfer tube, and may provide a sufficient operating space for special tools to flatten the heat transfer tube or tightly attach the heat transfer tube to the through groove by clamping. The depth h4 of the C-shaped through groove and the depth h4 of the U-shaped through groove are different, and may be selected or adjusted according to actual needs.

As shown in diagrams a, b, c, f and n in Fig. 9, the through groove 22 is arranged on the first end surface 211 of the pole. At this time, except for the gap at the opening of the through groove, the first end surface 211 is completely used as an electrical connection area for connection with an electrode plate. As shown in diagrams d and e in Fig. 9, the through groove 22 may be arranged on the side wall 213 of the pole. At this time, the first end surface 211 is completely used as an electrical connection area for connection with an electrode plate. As shown in diagrams g and m in Fig. 9, when the opening of the through groove 22 is located on the side wall 213, two through grooves may be arranged on two opposite sides of the electrical adapter simultaneously, so as to increase the placing number of heat transfer tubes and improve the heat transfer efficiency of the pole.

The area of the electrical connection area is too small, which reduces the current carrying area and increases the temperature of the electrical connector. In some embodiments, in order to increase the area of the electrical connection area, the through groove 22 is eccentrically arranged. As shown in diagram c in Fig. 9, the through groove 22 divides the first end surface into a first area 2111 and a second area 2112, the first area 2111 is an electrical connection area, and the area of the first area 2111 accounts for not less than 50% of the area of the first end surface. This design may effectively increase the area of the electrical connection area and increase the current carrying area. It should be noted that the area of the first end surface includes the missing area due to the opening of the through groove, that is, the area of the first end surface is equivalent to the area of the second end surface.

As shown in diagrams a, d and n in Fig. 9, the horizontal cross section (transverse section) of the electrical adapter 21 may be circular, rectangular or track-shaped, electrical adapters of different shapes may be selected according to different battery models, and other shapes may also be used. This embodiment will not be exhaustive.

As shown in diagrams a and b in Fig. 10, the second end surface 212 of the electrical connector is close to the electrode assembly, and the heat transfer tube should be arranged as close as possible to the second end surface 212, thereby improving the heat transfer efficiency and reducing the internal temperature of the battery. In order to adapt to most square batteries commonly used on the market, in this embodiment, the height h1 of the electrical adapter is 11-18 mm, and the distance h2 between the lowest point of the through groove and the second end surface 212 of the pole is 2-4 mm. This arrangement may make the heat transfer tube as close as possible to the highest point of the temperature of the pole for heat transfer. When the diameter of the heat transfer tube is excessively less than that of the through groove, the contact is not tight. When the diameter of the heat transfer tube is excessively greater than that of the through groove, the heat transfer tube is deformed. Therefore, the ratio of the diameter of the heat transfer tube to the widest point h3 of the through groove is (1:1.05)-(1:1.1). In an embodiment, the diameter of the heat transfer tube is φ10, the size of the diameter is 10 mm, and the widest point h3 of the through groove is 10.5-11 mm, so that the heat transfer tube may be easily placed in the through groove and then tightly pressed and closely attached to the through groove to improve the heat transfer efficiency.

In some embodiments, as shown in Fig. 10, the depth h4 of the through groove is less than the diameter of the heat transfer tube, so that the heat transfer tube slightly protrudes out of the surface of the pole, which is favorable for flattening the heat transfer tube to enable the heat transfer tube to be in close contact with the through groove.

In some embodiments, the surface of the through groove is provided with an insulated layer which may be coated with an insulated material or pasted with a silicone layer, a rubber layer and the like, or an insulated layer may be arranged on the heat transfer tube to enable the heat transfer tube made of a metal material and the electrical adapter to be mounted in an insulated manner, so that the electrical adapter of this present disclosure is used when battery packs are connected in series.

As shown in diagrams b, c, f and n in Fig. 9, when the electrical connector is fixedly connected to the pole, the bottom of the through groove of the electrical connector is provided with a fixing hole 221, and the electrical connector and the battery pole are fixed through the fixing hole 221 and specifically may be fixed by a screw connection process. The fixing hole may also be a fixing groove for fixing by welding.

Fig. 11 and Fig. 12 are schematic structural diagrams after an electrical connector is provided with a fixing hole and an avoidance groove. In order not to affect the tight fixation between the heat transfer tube and the through groove after welding, a welding groove 222 and an avoidance groove 223 are arranged in the through groove, the welding groove 222 extends along a radial direction of the bottom of the through groove, and the avoidance groove 223 is arranged along a circumferential direction of the fixing hole 221. The arrangement of the welding groove 222 enables the overflowing welding material after welding to be filled into the welding groove without affecting the flatness of a clamping surface between the heat transfer tube and the through groove, thereby ensuring the close contact between the heat transfer tube and the inner wall of the through groove. The arrangement of the avoidance groove 223 provides an accommodating space for a nut during bolted connection of the electrical adapter and the pole.

The position of the second end surface 212 of the electrical adapter is also provided with an extension area 224. After battery cells are assembled into a battery pack, the extension area 224 is fixedly connected to the electrode plate of the battery pack to achieve serial connection or parallel connection of a plurality of batteries. Specifically, the extension area 224 is connected to the electrode plate by welding, riveting, bolt fixation, and other manners. The extension area 224 may also be provided with a tilted fixing edge 225 to adapt to different forms of assembly manners. The fixing edge 225 is configured to be electrically connected to the electrode plate of the battery by welding, riveting, bolt fixation, and other manners.

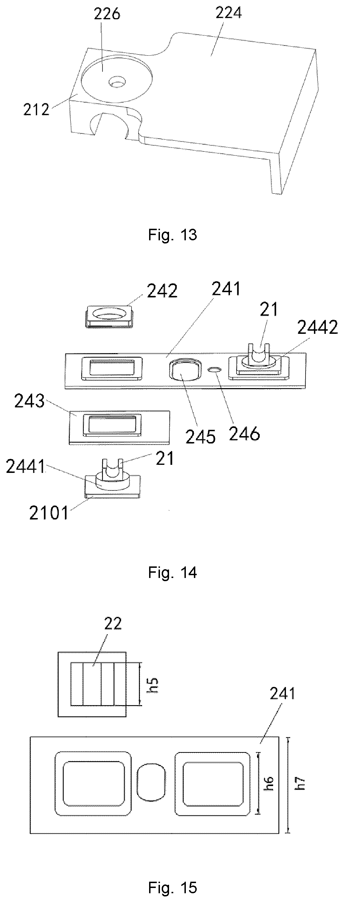

As shown in Fig. 13, in order to ensure more stable fixation between the electrical adapter and the pole 210, a side of the second end surface 212 facing the pole is provided with an accommodating groove 226 for clamping and fixing with the battery pole. The shape of the accommodating groove 226 is matched with the contour of the pole, so that the pole is clamped into the accommodating groove 226.

### Embodiment 6

Fig. 14 is a schematic structural diagram of an upper cover assembly provided in this embodiment. The upper cover assembly includes a cover plate 241, a first insulated part 242, a second insulated part 243, a positive pole 2441 and a negative pole 2442. The first insulated part 242 is arranged above the cover plate 241, and the second insulated part 243 is arranged below the cover plate 241. The positive pole 2441 and the negative pole 2442 sequentially pass through the second insulated part 243, the cover plate 241 and the first insulated part 242 and then are fixed on the cover plate 241. The positive pole 2441 and the negative pole 2442 are fixedly provided with electrical adapters 21 respectively so as to place heat transfer tubes in the through grooves of the electrical adapters 21. The cover plate 241 is also provided with an explosion venting port 245 and a liquid injection port 246.

Fig. 15 is a schematic diagram of definition of each size of an electrical adapter and an upper cover assembly. In this embodiment, the length h5 of the through groove 22 is not less than the width h6 of the pole. Within a certain range, the longer the through groove, the larger the contact area between the heat transfer tube and the electrical adapter, and the better the heat transfer efficiency. The width of the cover plate 241 is h7, the thickness of the cover plate 241 is the same as that of the battery cell, the electrical adapter and the pole are fixed by means of welding or screw connection, and the through groove 22 extends along a thickness direction of the battery cell, that is, the through groove 22 extends along an extension direction of h7 of the cover plate of the battery cell. In the upper cover assembly provided in this embodiment, the specific structures of the electrical adapter and the pole and the relationship between the electrical adapter and the pole are described in detail in Embodiment 5.

In this embodiment, the pole is provided with the electrical adapter with the through groove so as to place the heat transfer tube in the through groove, so that the temperature of the pole may be effectively controlled after being transferred by the heat transfer tube. This present disclosure is simple in structure, strong in practicability and easy to operate, is able to balance the heat of the battery pack, has good heat transfer and heat dissipation effects, and has low cost.

### Embodiment 7

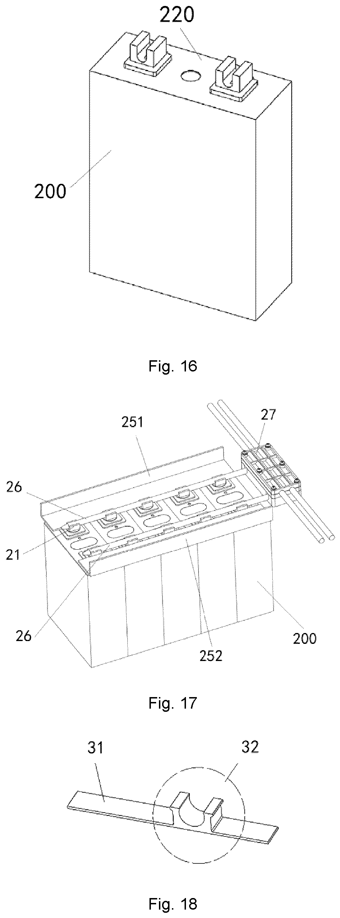

Fig. 16 is a schematic structural diagram of a battery cell in this embodiment. A battery cell 200 includes an upper cover assembly 220 described in Embodiment 6, and also includes a battery barrel and an electrode assembly (not shown in the figure) arranged in the battery barrel.

In this embodiment, the pole is provided with the electrical adapter with the through groove so as to place the heat transfer tube in the through groove, so that the temperature of the pole may be effectively controlled after being transferred by the heat transfer tube. This present disclosure is simple in structure, strong in practicability and easy to operate, is able to balance the heat of the battery pack, has good heat transfer and heat dissipation effects, and has low cost.

### Embodiment 8

Fig. 17 is a schematic structural diagram of a battery pack in this embodiment. The battery pack includes a plurality of battery cells 200 described in Embodiment 5, and the battery cells 200 are connected in parallel. Positive poles and negative poles of the battery cells 200 are both provided with electrical adapters 21. The battery pack also includes a temperature control assembly 27, a positive plate 251 and a negative plate 252, the positive plate 251 is electrically connected to the positive poles of all battery cells, and the negative plate 252 is electrically connected to the negative poles of all battery cells. The battery pack also includes two heat transfer tubes 26 which are respectively fixed on the electrical adapters 21 of the positive poles and negative poles of the battery pack. The battery pack also includes a temperature control assembly 27, and the temperature control assembly 27 includes a tube line and an external device for heat exchange with the heat transfer tube 26. The heat transfer tube 26 may be a heat tube or a liquid cooling tube. When the heat transfer tube is the heat tube, the temperature control assembly is a semiconductor refrigerator. When the heat transfer tube is the liquid cooling tube, the temperature control assembly is a water cooler. The pole is provided with the electrical adapter with the through groove so as to place the heat transfer tube in the through groove, so that the temperature of the pole may be effectively controlled after being transferred by the heat transfer tube. In an embodiment, the first end surface of the electrical adapter is provided with an electrical connection area, so that an electrode plate of the battery pack may be mounted on the electrical connection area to achieve serial connection or parallel connection of a plurality of battery cells. When a plurality of battery cells are connected in series, corresponding improvements need to be made to the positive plate and the negative plate to form a series circuit among the battery cells and insulate the groove or the heat transfer tube. This present disclosure is simple in structure, strong in practicability and easy to operate, is able to balance the heat of the battery pack, has good heat transfer and heat dissipation effects, and has low cost.

The following is a summary analysis of performance parameters of the battery pack using the pole provided in this present disclosure:
A shown in diagrams a and b in Fig. 10, the part with the height h2 is a combined plastic sealing area between the electrical adapter and the pole, and the part with the height h4 is a placement position of the heat transfer tube. After the heat transfer tube is placed, the surface temperature of the battery shell and the temperature of the pole are tested by a temperature tester. It is found that with the change of the values of h2 and h4, the surface temperature of the battery shell and the temperature of the pole change accordingly. When h2 is less than 2 mm, the fixing process between the electrical adapter and the pole is limited. When h2 is greater than 4 mm, although the temperature of the pole decreases compared to when the electrical adapter and the heat transfer tube are not additionally arranged, the degree of temperature decrease of the battery is no longer significant. Therefore, the optimal selection range of h2 is 2-4 mm.

**Table 1 Surface temperature of battery pole and battery shell under different sizes of through grooves**

| h2 height (mm) | Comparative Example (conventional pole on the market) | 2 | 3 | 4 | 5 |
|---|---|---|---|---|---|
| Surface temperature of pole (°C) | 42 | 30.8 | 31.6 | 33.2 | 35.1 |
| Surface temperature of battery shell (°C) | 38 | 34.2 | 34.6 | 34.9 | 35.6 |

From the above table, it can be seen that as the value of h2 increases, within the range of 2-4 mm, the temperature of the pole is not higher than 34°C, and the surface temperature of the battery shell is also below 35°C. For overall temperature control, compared to conventional pole batteries on the market without using the electrical adapter and the heat transfer tube of this present disclosure, the temperature of the pole is reduced by at least 16.4%, and the surface temperature of the battery shell is reduced by at least 16.8%, thereby effectively reducing the overall temperature of the battery and the temperature of the pole, and greatly improving the safety performance.

**Table 2 Surface temperature of battery pole under different sizes of through grooves**

| | | | | | | |
|---|---|---|---|---|---|---|
| h5:h6 | Comparative Example | 1.05:1 | 1.1:1 | 1.15:1 | 1.2:1 | 1.25:1 |
| Temperature of pole (°C) | 42 | 34.5 | 33.5 | 32.1 | 31.2 | 30.3 |

As shown in Table 2, the second end surface covers the pole. With reference to Fig. 15, the ratio of the length h5 of the through groove to the width h6 of the pole has a significant impact on the temperature of the battery pole. When h2 is fixed at 3 mm, the larger the attaching area between the heat transfer tube and the pole, the better the heat transfer and heat dissipation effects, but the maximum length should not exceed the width of the cover plate. As shown in Table 2, after testing the temperatures of the poles during 1C charging and discharging of batteries for different lengths of through grooves, compared to the poles of conventional batteries on the market without using the electrical adapter and the heat transfer tube of this present disclosure, the temperature of the pole is reduced by at least 17.9%, thereby significantly reducing the temperature of the pole, and greatly improving the safety performance.

As shown in the diagram c in Fig. 9, after the first end surface is divided into the first area 2111 and the second area 2112 by the through groove, the larger the proportion between the first area 2111 and the first end surface 211, the larger the area of the electrode plate for fixing the battery pack, and the larger the current carrying area.

### Embodiment 9

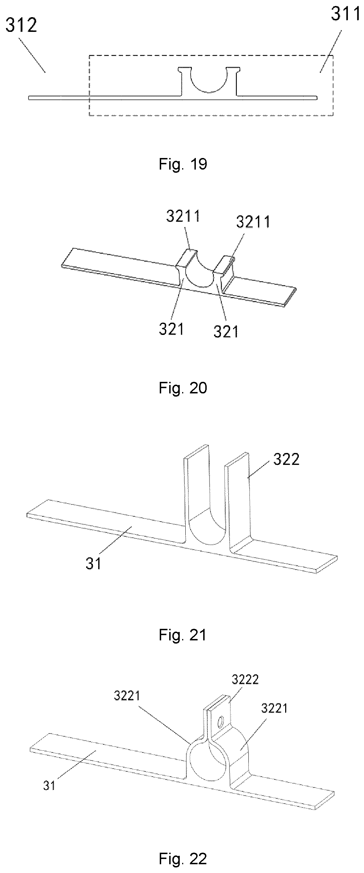

Fig. 18 and Fig. 19 are schematic structural diagrams of an electrical adapter. In this embodiment, the electrical adapter is used for a battery cell with a plurality of built-in pouch battery cores, tabs of the pouch battery cores extend out of a battery cell shell, and a plurality of tabs are connected to the electrical adapter one by one. After the battery cells are assembled into a battery pack, all electrical adapters are then electrically connected to a positive plate and a negative plate of the battery pack to achieve serial connection or parallel connection of a plurality of battery cells.

As shown in Fig. 18 and Fig. 19, the electrical adapter includes a base 31 and a through groove 32, the base includes a first electrical connection area 311 and a second electrical connection area 312, the through groove 32 is arranged on the first electrical connection area 311, the through groove 32 is configured to fix a heat transfer tube, the first electrical connection area 311 is configured to be electrically connected to a tab of a battery cell, and the second electrical connection area 312 is configured to be electrically connected to an electrode plate of a battery pack. The through groove 32 is convexly arranged on the first electrical connection area 311, and the length of the through groove 32 in an axial direction is close to or the same as the width of the base. After a plurality of tabs of the battery cells are bent, the bent surface is fixed on the side of the first electrical connection area 311 facing away from the through groove and specifically may be fixed by welding. During use of the battery, the temperature of the tab is the highest. In order to improve the safety of the battery and prolong the service life of the battery, it is very important to cool the battery. Therefore, the length of the first electrical connection area of the base should be as close as possible to the tab, so as to enable the heat of the tab to be fully conducted to the electrical adapter, and further enable the heat transfer tube to be in full contact with the electrical adapter to achieve the effect of cooling the tab by the heat transfer tube. The device has a simple structure and a good cooling effect.

Specifically, the through groove is a clamping groove, the clamping groove includes a pair of clamping teeth, and an opening is formed between the clamping teeth, so that the cross section of the through groove is C-shaped. The heat transfer tube is clamped and fixed between the clamping teeth through the opening. The joint between the clamping teeth and the base is relatively thick, and the thickness gradually decreases until the opening. In some embodiments, an inner wall of the through groove is provided with an insulated layer for use in an insulated environment.

In some embodiments, as shown in Fig. 20, clamping teeth 321 are provided with a platform 3211 at the opening, the platform 3211 is tilted outward along the opening of the clamping teeth and protrudes from the edge of the clamping teeth, and the surface of the platform 3211 is almost parallel to the base 31, so that the cross section of the through groove is Ω-shaped. After the heat transfer tube is placed in the through groove 32, in order to increase the contact area between the heat transfer tube and the through groove 32, it is necessary to extrude the heat transfer tube to be closely attached to the clamping teeth. The arrangement of the platform 3211 is to provide a stress plane for extruding the heat transfer tube and increase the stress area of the clamping teeth to enable the clamping teeth to be stressed uniformly, thereby ensuring that the clamping teeth are not deformed or broken due to too high local pressure during the extrusion process, and simultaneously ensuring that the heat transfer tube is flattened and deformed to a certain extent and closely attached to the inner wall of the through groove.

After battery cells are assembled into a battery pack, the second electrical connection area 312 is fixedly connected to the electrode plate of the battery pack to achieve serial connection or parallel connection of a plurality of batteries. Specifically, the second electrical connection area 312 is connected to the electrode plate by welding, riveting, bolt fixation, and other manners.

### Embodiment 10

Fig. 18 and Fig. 19 are schematic structural diagrams of an electrical adapter. In this embodiment, the electrical adapter is used for a battery cell with a plurality of built-in pouch battery cores, tabs of the pouch battery cores extend out of a battery cell shell, and a plurality of tabs are connected to the electrical adapter one by one. After the battery cells are assembled into a battery pack, all electrical adapters are then electrically connected to a positive plate and a negative plate of the battery pack to achieve serial connection or parallel connection of a plurality of battery cells.

The electrical adapter includes a base 31 and a through groove 32, the base includes a first electrical connection area 311 and a second electrical connection area 312, the through groove 32 is arranged on the first electrical connection area 311, the through groove 32 is configured to fix a heat transfer tube, the first electrical connection area 311 is configured to be electrically connected to a tab of a battery cell, and the second electrical connection area 312 is configured to be electrically connected to an electrode plate of a battery pack composed of battery cells.

The through groove 32 is convexly arranged on the first electrical connection area 311, and the length of the through groove 32 in an axial direction is close to or the same as the width of the base. After a plurality of tabs of the battery cells are bent, the bent surface is fixed on the side of the first electrical connection area 311 facing away from the through groove and specifically may be fixed by welding. During use of the battery, the temperature of the tab is the highest. In order to improve the safety of the battery and prolong the service life of the battery, it is very important to cool the battery. Therefore, the length of the first electrical connection area of the base should be as close as possible to the tab, so as to enable the heat of the tab to be fully conducted to the electrical adapter, and further enable the heat transfer tube to be in full contact with the electrical adapter to achieve the effect of cooling the tab by the heat transfer tube. The device has a simple structure and a good cooling effect.

In some embodiments, an inner wall of the through groove is provided with an insulated layer for use in an insulated environment.

As shown in Fig. 21 and Fig. 22, the through groove 32 includes a pair of clamping sheets 322, the end of the clamping sheet 322 close to the base 31 is a clamping area 3221, the end of the clamping sheet 322 away from the base 31 is a locking area 3222, the clamping area 3221 is configured to clamp the heat transfer tube, and the locking area 3222 is configured to lock and fix the clamping sheet. Preferably, the locking areas of the clamping sheets 322 are fixed by riveting. The clamping sheets are fixed by riveting, which is favorable for the close contact between the clamping sheet and the heat transfer tube to facilitate the tight fixation between the heat transfer tube and the through groove, so that the heat transfer effect of the heat transfer tube is better. Moreover, the operation is simple and convenient, and the efficiency is high.

### Embodiment 11

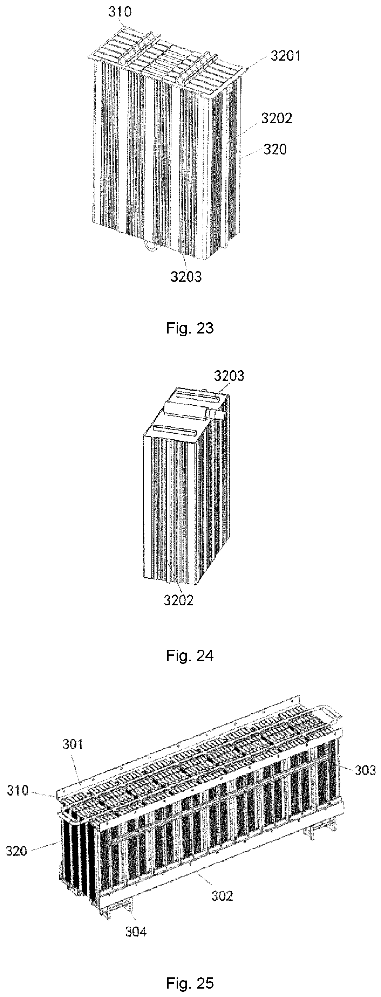

Fig. 23 and Fig. 24 are schematic structural diagrams of a battery cell. The battery cell includes a battery shell 320, a plurality of pouch battery cores are built in the battery shell 320, each tab of each pouch battery core is fixedly provided with an electrical adapter 310 described in Embodiment 9 or 2, the battery shell 320 is made of a metal material, and an insulated gasket 3201 is arranged between the electrical adapter 310 and the battery shell 320 to avoid electric conduction between the electrical adapter and the battery shell.

### Embodiment 12

This embodiment provides a battery pack, the battery pack includes a temperature control assembly, a positive plate and a negative plate, the battery pack is composed of a plurality of battery cells provided in Embodiment 11, and the tab of the battery cell is electrically connected to the first electrical connection area of the electrical adapter 310; the temperature control assembly includes a plurality of heat transfer tubes, and the heat transfer tube is fixed on the through groove; and an electrode plate 301 is divided into a positive plate and a negative plate, the positive plate and the negative plate are fixedly arranged on two sides of the battery pack, and the second electrical connection area of the electrical adapter is electrically connected to the positive plate or the negative plate respectively. In this embodiment, the heat transfer tube is a heat tube or a liquid cooling tube.

As shown in Fig. 23, Fig. 24, Fig. 25 and Fig. 26, the battery cell includes an upper cover plate, a barrel and a lower cover plate, the electrode plate 301 is L-shaped, the electrode plate is electrically connected to the electrical adapter 310 on a parallel surface of the upper cover plate, and the L-shaped electrode plate is provided with a connecting part on a parallel surface of the barrel so as to be connected in series or parallel with adjacent batteries to form a battery pack. The battery shell is provided with first mounting positions 3202 and second mounting positions 3203, the first mounting positions 3202 are convexly arranged on two sides of the battery shell 320 along a height direction of the battery shell, and the second mounting positions 3203 are convexly arranged on the lower cover plate along a thickness direction of the shell. The battery pack includes first mounting parts 302, the first mounting part 302 is L-shaped and includes two mounting surfaces perpendicular to each other, the parallel surface and vertical surface of the lower cover plate of the battery shell are bonded and coated with the lower cover plate of the battery shell and the battery barrel, the first mounting surface of the first mounting part 302 and the first mounting position 3202 are fixedly mounted, and the second mounting surface of the first mounting part 302 and the second mounting position 3203 are fixedly mounted. The battery is provided with second mounting parts 303, and the second mounting parts 303 extend along a stacking direction of batteries and are fixed on the first mounting positions 3202 on two sides of the battery shell. The battery is also provided with support parts 304 which are fixedly arranged on one side of the lower cover plate of the first battery shell and are configured to mount the battery on a battery bracket.

When a plurality of battery cells are assembled into a battery pack, in a case that the battery cells are connected in parallel, the heat transfer tube is not provided with an insulated layer; and in a case that the battery cells are connected in series, the heat transfer tube is provided with an insulated layer, or an insulated layer is arranged in the through groove to avoid electric conduction due to contact between the heat transfer tube and the through groove.

### Embodiment 13

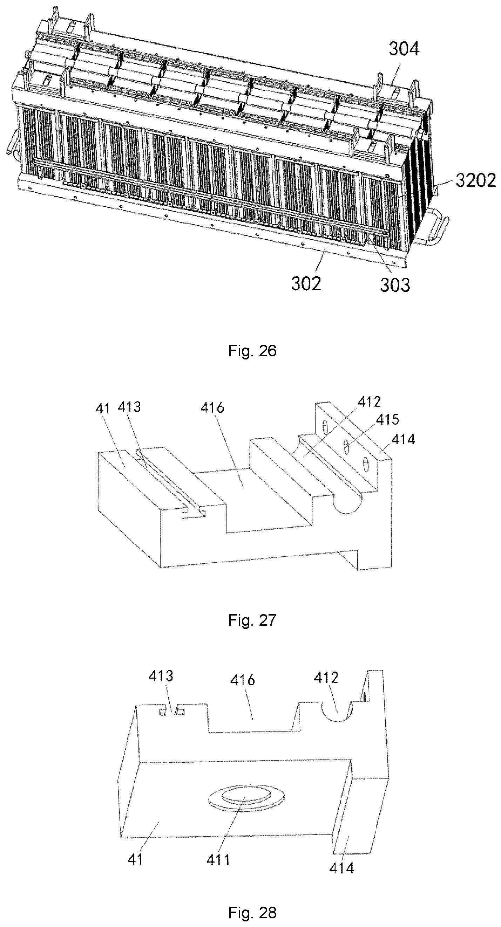

As shown in Fig. 27 to Fig. 30, this embodiment provides an electrical adapter, and the electrical adapter includes a conductive block 41; and a bottom end of the conductive block 41 is provided with a pole mounting groove 411, the pole mounting groove 411 is configured to cooperate with a pole 421 of a square battery 42, a top end of the conductive block 41 is provided with at least one through groove 412, the through groove 412 is configured to mount a heat transfer tube, the heat transfer tube is a heat tube 44, the top end or a side surface of the conductive block 41 is provided with a clamping groove 413, and the clamping groove 413 is configured to mount an explosion venting plate 45. The electrical adapter has a simple structure, and a plurality of square batteries 42 may be connected in series or parallel by only arranging the electrical adapter. A plurality of square batteries 42 may be connected in series or parallel through the electrical adapter. Simultaneously, during the charging and discharging processes of the square battery 42, the temperature of the joint between poles is the highest. Based on this, the conductive block 41 is provided with a through groove 412, a heat tube 44 may be mounted in the through groove 412, and thus, the heat of the battery pole 421 is taken away to keep the temperature of the battery within the optimal range. In addition, the electrical adapter is also provided with the clamping groove 413, and the clamping groove 413 and the explosion venting plate 45 may form an explosion venting channel 46 to achieve directional discharge of thermal runaway fumes. By the above structure, the electrical adapter has multiple functions such as electric conduction, heat dissipation and fume discharge and thus is widely applied.

In order to facilitate electrical connection between a plurality of or adjacent conductive blocks 41, a side surface of the conductive block 41 away from the clamping groove 413 may be provided with a mounting block 414, and electrical connection between adjacent conductive blocks 41 may be achieved through the mounting block 414. In addition, the mounting block 414 may also be provided with mounting holes 415, and reliable electrical connection may be achieved by arranging bolts in the mounting holes 415. The top end of the above conductive block 41 is also provided with a welding groove 416. By the formation of the welding groove 416, when the conductive block 41 is electrically connected to the poles 421 of the square battery by welding, the wall thickness of the welding part is reduced, so that the welding is more reliable. The above through groove 412 specifically may be an arc-shaped groove or an arch-shaped groove. By the arc-shaped groove or the arch-shaped groove, the heat tube 44 may be embedded in the through groove 412 more tightly, and the conductive block 41 is in close contact with the heat tube 44, thereby better achieving heat transfer and improving the heat transfer effect.

The electrical adapter in this embodiment is a connector for facilitating serial or parallel connection of existing square batteries. The connector is an extrusion component fixed on a positive pole 4211 or a negative pole 4212 of a square battery cell, and the connector may be fixed by welding or punching screws or may be integrated with a cover plate 422 and the poles 421. When a plurality of square batteries 42 are connected in parallel or series, the heat tube 44 may be inserted in the through groove 412 on the electrical adapter to dissipate heat from the battery. Furthermore, the explosion venting plate 45 is embedded in the clamping groove 413 of the electrical adapter to form an explosion venting channel 46 together with the side wall of the electrical adapter and the cover plate 422. The explosion venting channel 46 achieves directional discharge of thermal runaway fumes. The explosion venting plate 45 is made of an insulated material such as plastic or insulated rubber. In addition, colloids may be injected and solidified among a plurality of square batteries 42 according to needs to form an entire pack set with good heat dissipation.

### Embodiment 14

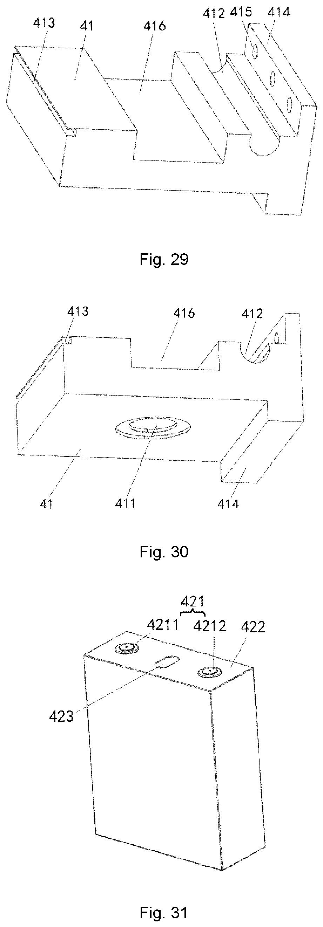

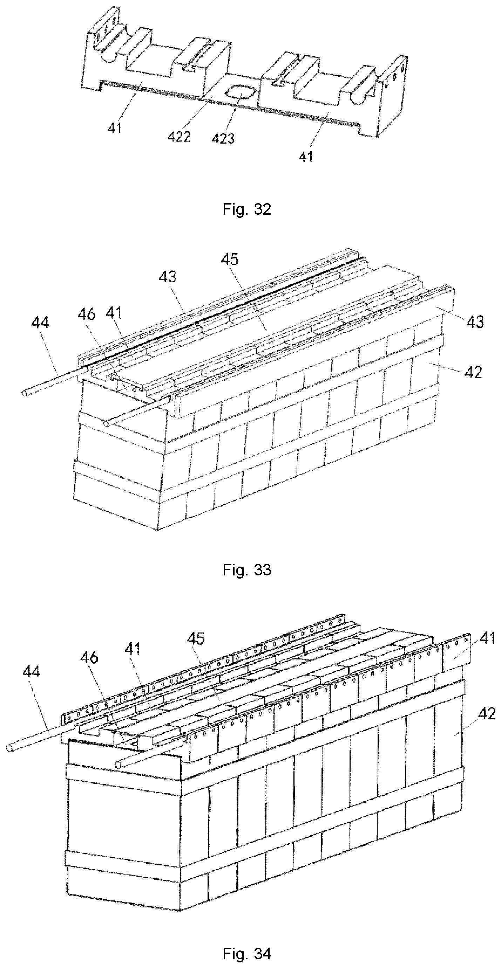

As shown in Fig. 31 and Fig. 32, an existing square battery includes an upper cover assembly, a battery shell and an electrode assembly, and the electrode assembly is arranged in a closed cavity formed by the upper cover assembly and the battery shell. The upper cover assembly provided in this embodiment includes a cover plate 422, poles 421 and two electrical adapters, the poles 421 include a positive pole 4211 and a negative pole 4212, the positive pole 4211 and the negative pole 4212 pass through the cover plate 422, the cover plate 422 is provided with an explosion venting port, and an explosion venting film 423 is arranged in the explosion venting port. Bottom ends of conductive blocks 41 are provided with pole mounting grooves 411, and the pole mounting grooves 411 are configured to cooperate with the positive pole 4211 and the negative pole 4212 of the square battery 42, so that the electrical adapters are integrated with the positive pole and the negative pole respectively. The top end of the conductive block 41 is provided with at least one through groove 412, the through groove 412 is configured to mount a heat tube 44, the top end or the side surface of the conductive block 41 is provided with a clamping groove 413, and the clamping groove 413 is configured to mount an explosion venting plate 45. A plurality of square batteries 42 may be connected in series or parallel through the electrical adapter. Furthermore, the heat tube 44 may be mounted in the through groove 412, and thus, the heat of the battery pole 421 is taken away to keep the temperature of the battery within the optimal range. In addition, the electrical adapter is also provided with the clamping groove 413, and the clamping groove 413 and the explosion venting plate 45 may form an explosion venting channel 46 to achieve directional discharge of thermal runaway fumes. Therefore, the electrical adapter has multiple functions such as electric conduction, heat dissipation and fume discharge.

### Embodiment 15

This present disclosure provides a battery pack which is formed by connecting a plurality of square batteries in parallel. The battery pack includes an explosion venting plate, two conductive plates, N square batteries and 2N electrical adapters, wherein N is an integer greater than or equal to 2; the N square batteries are sequentially arranged, positive poles of the square batteries are located on a first side of the square batteries, and negative poles of the square batteries are located on a second side of the square batteries; N conductive blocks are sequentially arranged on the first side of the N square batteries, pole mounting grooves of the conductive blocks are in embedded cooperation with the positive poles of the square batteries respectively, the other N conductive blocks are sequentially arranged on the second side of the N square batteries, and pole mounting grooves of the conductive blocks are in embedded cooperation with the negative poles of the square batteries respectively; the two conductive plates are electrically connected to the N conductive blocks on the first side of the square batteries and the N conductive blocks on the second side of the square batteries respectively, so that the N square batteries are connected in parallel through the two conductive plates; through grooves of N electrical adapters sequentially communicate with each other and are provided with at least one heat tube; and the explosion venting plate is inserted into clamping grooves of the 2N conductive blocks to form an explosion venting channel together with side walls of the conductive blocks and cover plates of the square batteries, and the explosion venting channel communicates with explosion venting ports of the square batteries.

As shown in Fig. 33 and Fig. 34, the battery pack includes an explosion venting plate 45, two conductive plates 43, 10 square batteries 42 and 20 electrical adapters. the 10 square batteries 42 are sequentially arranged, positive poles 4211 of the square batteries 42 are located on a first side of the square batteries 42, and negative poles 4212 of the square batteries 42 are located on a second side of the square batteries 42; and 10 conductive blocks 41 are sequentially arranged on the first side of the 10 square batteries 42, pole mounting grooves 411 of the conductive blocks 41 are in embedded cooperation with the positive poles 4211 of the square batteries 42 respectively, the other 10 conductive blocks 41 are sequentially arranged on the second side of the 10 square batteries 42, and pole mounting grooves 411 of the conductive blocks 41 are in embedded cooperation with the negative poles 4212 of the square batteries 42 respectively. Furthermore, a single conductive plate 43 is electrically connected to the 10 conductive blocks 41 on the first side respectively, that is, electrically connected to the conductive blocks 41 connected to the positive poles, and another conductive plate 43 is electrically connected to the 10 conductive blocks 41 on the second side respectively, that is, electrically connected to the conductive blocks 41 connected to the negative poles, so that the N square batteries 42 are connected in parallel through the two conductive plates 43. During specific connection, the conductive blocks are electrically connected to the positive poles 4211 and negative poles 4212 of the square batteries 42 by welding, and the conductive plates 43 are electrically connected to the conductive blocks 41 through bolts.

In this embodiment, the through grooves 412 of the 10 conductive blocks 41 on the first side of the square batteries 42 sequentially communicate with each other, and heat tubes 44 are embedded in the through grooves 412; the through grooves 412 of the 10 conductive blocks 41 on the second side of the square batteries 42 sequentially communicate with each other, and heat tubes 44 are embedded in the through grooves 412; and the heat tubes take away the heat from the positive poles and the negative poles, so that the square batteries operate within a better temperature range.

In this embodiment, 10 conductive blocks 41 are sequentially arranged on the first side of the 10 square batteries 42, and the other 10 conductive blocks 41 are sequentially arranged on the second side of the 10 square batteries 42. At this time, the clamping grooves 413 of the conductive blocks 41 arranged on the first side and the second side are oppositely arranged. The explosion venting plate 45 is inserted into the clamping grooves 413 of the 2N conductive blocks 41 to form an explosion venting channel 46 together with side walls of the conductive blocks 41 and cover plates of the square batteries 42. The above explosion venting plate 45 is a U-shaped explosion venting plate or a flat explosion venting plate. A side wall of the U-shaped explosion venting plate is respectively embedded in the clamping grooves 413 at top ends of the conductive blocks 41 to form an explosion venting channel 46, or the flat explosion venting plate is respectively embedded in the clamping grooves 413 on side walls of the conductive blocks 41 to form an explosion venting channel 46. The explosion venting channel 46 communicates with explosion venting ports of the square batteries 42. During thermal runaway of batteries, thermal runaway fumes are discharged from the explosion venting ports of the square batteries 42 and then are directionally discharged to the outer side of the batteries through the explosion venting channel 46, thereby avoiding the secondary impact of the thermal runaway fumes on the batteries.

### Embodiment 16

This present disclosure provides a battery pack which is formed by connecting square batteries in series. The battery pack includes an explosion venting plate, N-1 conductive plates, N square batteries and 2N electrical adapters, wherein N is an integer greater than or equal to 2; the plurality of square batteries are sequentially arranged, a positive pole of the i^{th} square battery is located on a first side, a negative pole of the i^{th} square battery is located on a second side, a negative pole of the i+1^{th} square battery is located on the first side, and a positive pole of the i+1^{th} square battery is located on the second side; N conductive blocks are sequentially arranged on the first side of the N square batteries, pole mounting grooves of the conductive blocks are in embedded cooperation with the positive poles or the negative poles of the square batteries respectively, the other N conductive blocks are sequentially arranged on the second side of the N square batteries, and pole mounting grooves of the conductive blocks are in embedded cooperation with the negative poles or the positive poles of the square batteries respectively; contact surfaces of adjacent conductive blocks are insulated, and the N square batteries are connected in series through the N-1 conductive plates between the 2N conductive blocks; through grooves of N electrical adapters sequentially communicate with each other and are provided with at least one heat tube, and an outer wall of the heat tube is provided with an insulated layer; and the explosion venting plate is inserted into clamping grooves of the 2N conductive blocks to form an explosion venting channel together with side walls of the conductive blocks and cover plates of the square batteries, and the explosion venting channel communicates with explosion venting ports of the square batteries.

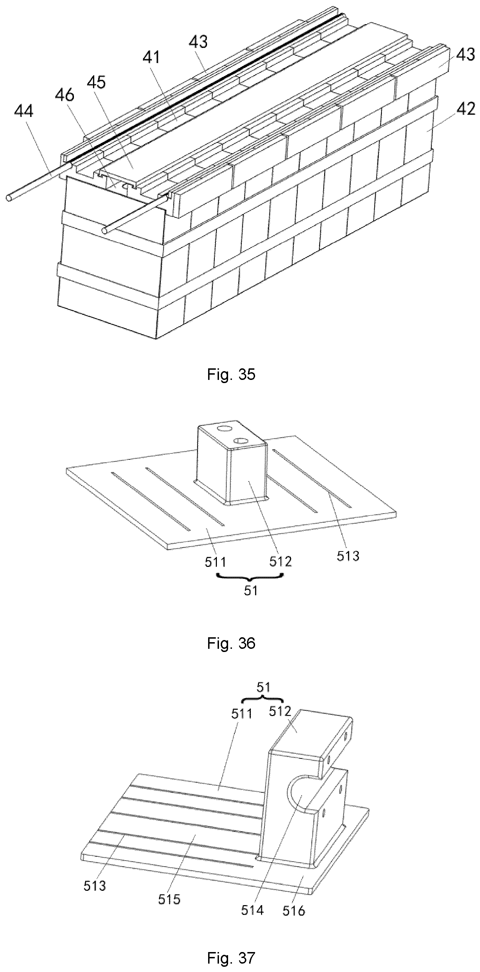

As shown in Fig. 35, the battery pack includes an explosion venting plate 45, 9 conductive plates 43, 20 square batteries 42 and 20 electrical adapters; the plurality of square batteries 42 are sequentially arranged, a positive pole 4211 of the i^{th} square battery 42 is located on a first side, a negative pole 4212 of the i^{th} square battery 42 is located on a second side, a negative pole 4212 of the i+1^{th} square battery 42 is located on the first side, and a positive pole 4211 of the i+1^{th} square battery 42 is located on the second side; 10 conductive blocks 41 are sequentially arranged on the first side of 10 square batteries 42, pole mounting grooves 411 of the conductive blocks 41 are in embedded cooperation with the positive poles 4211 or the negative poles 4212 of the square batteries 42 respectively, the other 10 conductive blocks 41 are sequentially arranged on the second side of the 10 square batteries 42, and pole mounting grooves 411 of the conductive blocks 41 are in embedded cooperation with the negative poles 4212 or the positive poles 4211 of the square batteries 42 respectively; and contact surfaces of adjacent conductive blocks 41 are insulated through an insulated layer or an insulated gasket, and the 10 square batteries 42 are connected in series through the 9 conductive plates 43 between adjacent conductive blocks 41. During specific connection, the conductive blocks 41 are electrically connected to the positive poles 4211 and negative poles 4212 of the square batteries 42 by welding, and the conductive plates 43 are electrically connected to the conductive blocks 41 through bolts.

In this embodiment, the through grooves 412 of the 10 conductive blocks 41 on the first side of the square batteries 42 sequentially communicate with each other, and heat tubes 44 are embedded in the through grooves 412; and the through grooves 412 of the 10 conductive blocks 41 on the second side of the square batteries 42 sequentially communicate with each other, and heat tubes 44 are embedded in the through grooves 412. Outer walls of the above heat tubes are all provided with insulated layers to prevent a plurality of battery packs from being electrically connected through the heat tubes. The heat tubes take away the heat from the positive poles and the negative poles, so that the square batteries operate within a better temperature range.

In this embodiment, 10 conductive blocks 41 are sequentially arranged on the first side of the 10 square batteries 42, and the other 10 conductive blocks 41 are sequentially arranged on the second side of the 10 square batteries 42. At this time, the clamping grooves 413 of the conductive blocks 41 arranged on the first side and the second side are oppositely arranged. The explosion venting plate 45 is inserted into the clamping grooves 413 of the 20 conductive blocks 41 to form an explosion venting channel 46 together with side walls of the conductive blocks 41 and cover plates of the square batteries 42. The above explosion venting plate 45 is a U-shaped explosion venting plate or a flat explosion venting plate. A side wall of the U-shaped explosion venting plate is respectively embedded in the clamping grooves 413 at top ends of the conductive blocks 41 to form an explosion venting channel 46, or the flat explosion venting plate is respectively embedded in the clamping grooves 413 on side walls of the conductive blocks 41 to form an explosion venting channel 46. The explosion venting channel 46 communicates with explosion venting ports of the square batteries 42. During thermal runaway of batteries, thermal runaway fumes are discharged from the explosion venting ports of the square batteries 42 and then are directionally discharged to the outer side of the batteries through the explosion venting channel 46, thereby avoiding the secondary impact on the batteries.

### Embodiment 17

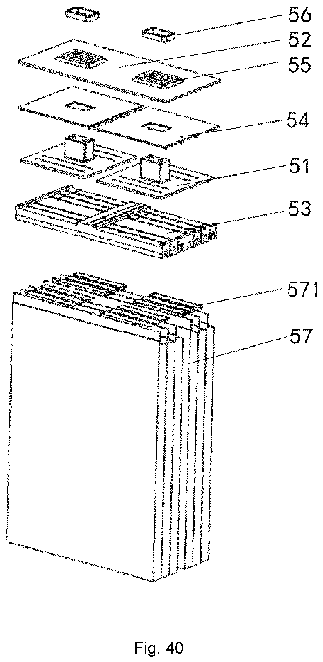

As shown in Fig. 36 and Fig. 40, this embodiment provides an electrical adapter for a battery pack. The electrical adapter 51 includes a busbar 511 and a pole 512. The busbar 511 is provided with a plurality of first slots 513 used for a tab 571 of each pouch battery core 57 in the battery pack to pass through and electrically connected to the busbar 511 after contact. In order to facilitate the tab 571 to pass through, the shape of the above first slot 513 is matched with the shape of the cross section of the tab 571. Since the cross section of the tab 571 of the existing pouch battery core 57 is rectangular, the above first slot 513 is preferably a rectangular slot. The size of the rectangular slot is slightly greater than the size of the tab 571 to ensure that the tab 571 may pass through the slot. If the size of the rectangular slot is too large compared to the size of the cross section of the tab 571, the positioning accuracy of the tab 571 in the first slot 513 is poor, resulting in poor subsequent welding quality. The above pole 512 is arranged on an end surface of the busbar 511 facing away from the pouch battery core and is integrated with the busbar 511, that is, the pole 512 and the busbar 511 may be extruded or cast integrally. The pole 512 may be a cylindrical structure and specifically may be a cylinder or a rectangular cylinder. Preferably, the pole 512 is a rectangular cylinder. The rectangular cylinder may increase the connection area with the busbar 511, thereby increasing the current flow area.

In addition, the above busbar 511 and pole 512 specifically may be made of metals with better electrical conductivity, such as copper and aluminum. The copper and aluminum have good electrical conductivity, so that the electrical connection with the tab 571 of the pouch battery core is more reliable.

### Embodiment 18

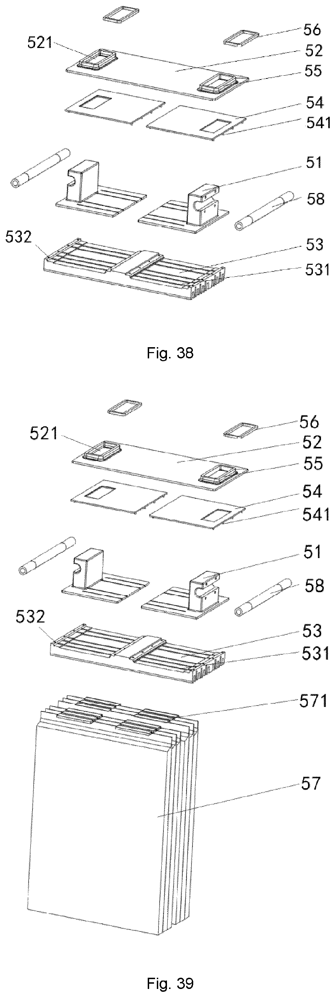

As shown in Fig. 37 and Fig. 39, this embodiment provides an electrical adapter for a battery pack. The electrical adapter 51 includes a busbar 511 and a pole 512. Different from Embodiment 17, in this embodiment, first slots 513 and the pole 512 are arranged in different areas, and the first slots 513 and the pole 512 do not affect each other during mounting. In an embodiment, a plurality of first slots 513 are arranged in parallel in a first area 515 of the busbar 511, and the pole 512 is arranged in a second area 516 of the busbar 511. The first area 515 and the second area 516 are two areas distributed along a length direction of the busbar 511, or the first area 515 and the second area 516 are two areas distributed along a width direction of the busbar 511. By arranging the first slots 513 and the pole 512 in different areas, the busbar 511 may be provided with more first slots 513 in a limited area, and then, more pouch battery cores may be connected in parallel. Furthermore, the heat generated by the battery pack and the busbar 511 may be well transferred to the pole 512 for centralized processing of the heat generated by a plurality of pouch battery cores and the busbar through the pole 512.

For the centralized processing of heat, in this embodiment, the pole 512 is provided with a through groove 14, a heat transfer tube (a heat tube or a liquid cooling tube) may be arranged in the through groove 14, and the heat generated by the battery pack and the busbar 511 is delivered in time through the pole 512 and is transferred to the heat transfer tube in the through groove 14, thereby avoiding the concentration of heat in the battery, and also avoiding the too high temperature of the pouch battery core, which may affect the normal operation of the pouch battery core.

In this embodiment, the above first slot 513 is an open slot, that is, the first slot 513 penetrates through the busbar 511 on the side away from the pole 512, so that when the tab 571 is mounted, the tab 571 may be inserted from one side of the busbar 511. Compared to the bottom-up insertion manner, side insertion is more convenient and quick and improves the mounting and disassembling efficiency.

### Embodiment 19

As shown in Fig. 38, this embodiment provides an upper cover assembly. The upper cover assembly includes a cover plate 52 and electrical adapters 51 in Embodiment 17 or Embodiment 18. The cover plate 52 is provided with at least two through holes 521. If more than two through holes 521 are provided, two through holes 521 are used for poles 512 to pass through, and the remaining through holes are used as liquid injection holes or pressure relief ports. The pole 512 of the above electrical adapter 51 passes through the through hole 521, and the cover plate 52 and the electrical adapter 51 are arranged in an insulated manner. The insulated arrangement may be achieved in multiple manners of arranging an insulated gasket, coating an insulated adhesive, and the like. In this embodiment, insulated clamping plates 54 are arranged between the cover plate 52 and the busbar 511. The insulated clamping plate 54 is a platy structure with a certain hardness, and specifically may be made of polytetrafluoroethylene. The insulated clamping plate 54 can not only achieve insulation, but also support the cover plate 52. In addition, a heat transfer tube 58 (a heat tube or a liquid cooling tube) may also be arranged in the through groove 14 of the above electrical adapter 51, and the heat generated by the battery pack and the busbar 511 may be delivered in time through the pole 512.

In this embodiment, the above upper cover assembly also includes an insulated support 53 arranged between the busbar 511 and the battery pack. The insulated support 53 is provided with a plurality of second slots 531 for the tab 571 of each pouch battery core 57 in the battery pack to pass through. The second slots 531 are a plurality of strip-shaped gaps convenient for the tabs 571 of the pouch battery cores to pass through, and the positions of the second slots 531 correspond to the positions of the first slots. The insulated support 53 may provide support for the connection between the electrical adapter 51 and the tab 571, so that the consistency of electrical connection between the tab 571 and the busbar 511 is better to facilitate subsequent mounting. In addition, the insulated support 53 may also locate the welding position of the tab 571 and the busbar 511, and may pad the empty space at the root of the pouch battery core, thereby being convenient for tightly pressing and welding the tab and the pole.

In addition, the above insulated clamping plates 54 may also be provided with positioning columns 541, and the insulated support 53 may be provided with positioning holes 532 cooperating with the positioning columns 541. The insulated support 53 and the insulated clamping plates 54 are accurately located through the positioning columns 541 and the positioning holes 532. The above insulated clamping plates 54 are configured to insulate the busbar 511 and the cover plate 52. One purpose of providing the positioning columns 541 and the positioning holes 532 is to locate the insulated clamping plates 54; and another purpose is to limit the positions of the poles 512 by locating the insulated clamping plates 54, ensure the accurate positions of the poles 512, ensure the mounting and cooperation of the poles 512 and the cover plate 52, and also ensure the insulation of gaps between the left and right of the pole busbar 511 and the outer shell, so that the assembly of the entire cover plate 52 is more accurate and reliable.

In this embodiment, a sealing rubber ring 55 may be arranged in the through hole 521 of the cover plate 52. One function of the sealing rubber ring 55 is to ensure the insulation between the pole 512 and the cover plate 52, and another function is to ensure the reliable sealing of the joint between the pole 512 and the cover plate 52. In addition, the pole 512 is also sleeved with a welding ring 56 on an outer side of the cover plate 52, and the welding ring 56 is welded to the pole 512. One purpose of providing the welding ring 56 is to locate the position of the height of the pole 512, and another purpose is to tightly press and seal the sealing rubber ring 55 to further ensure the reliable sealing and insulation of the sealing rubber ring 55.

### Embodiment 20

As shown in Fig. 39 and Fig. 40, this embodiment provides a battery pack. The battery pack includes a plurality of pouch battery cores 57 and the upper cover assembly in Embodiment 19. The tabs 571 (including positive tabs and negative tabs) of a plurality of pouch battery cores 57 respectively pass through the slots of two busbars 511 and then are bent, and are welded to the busbars 511.

The mounting process of the battery pack in this embodiment is as follows: The insulated support 53 is inserted into the tabs of the battery pack from top to bottom, and the tabs 571 of the pouch battery cores pass through the second slots 531 of the insulated support 53. Then, the electrical adapters 51 are placed above the insulated support 53, and the positive and negative tabs 571 of all pouch battery cores 57 respectively pass through the first slots 513 of the two electrical adapters 51 in the same way. After the tabs 571 of the pouch battery cores are bent and flattened, the tabs 571 of the pouch battery cores are welded to the busbars 511 by laser welding. Subsequently, the insulated clamping plates 54 are mounted and located by cooperation between the positioning holes 532 and the positioning columns 541. After the insulated clamping plates 54 are mounted in place, the cover plates 52 are mounted from top to bottom. Since the sealing rubber ring 55 is arranged at the cooperating position between the cover plate 52 and the pole 512, a force is applied to press the cover plate 52 in place so as to enable the sealing rubber ring 55 to be tightly combined with the pole 512. After the cover plate 52 is mounted in place, the welding ring 56 is mounted. After the sealing rubber ring 55 is compressed, the welding ring 56 and the pole 512 are welded to ensure sealing.

## Claims

1. A pole, arranged on a cover plate of a square battery, wherein the pole is a cylinder, the cylinder comprises a side wall, a first end surface and a second end surface, the side wall or the first end surface is at least provided with a through groove to mount a heat transfer tube, and the first end surface is also provided with an electrical connection area.

2. The pole as claimed in claim 1, wherein the second end surface of the pole is provided with a conductive connection part for electrical connection with an electrode assembly in the square battery.

3. The pole as claimed in claim 2, wherein the conductive connection part is welded or clamped to the pole.

4. The pole as claimed in claim 1, wherein the height of the pole is 20-25 mm.

5. The pole as claimed in claim 1, wherein a distance between the lowest point of the through groove and the second end surface is 7-12 mm.

6. The pole as claimed in claim 1, wherein a ratio of the diameter of the heat transfer tube to the widest point of the through groove is (1:1.05)-(1:1.1).

7. The pole as claimed in claim 1, wherein the through groove divides the first end surface into a first area and a second area, the first area is the electrical connection area, and a ratio of an area of the first area to an area of the first end surface is not lower than 50%.

8. The pole as claimed in claim 1, wherein a cross section of the through groove is C-shaped or U-shaped, and a depth of the through groove is less than the diameter of the heat transfer tube.

9. The pole as claimed in claim 1, wherein a surface of the through groove is provided with an insulated layer.

10. An upper cover assembly, wherein the upper cover assembly comprises a cover plate and also comprises two poles as claimed in any one of claims 1 to 9, and the two poles are arranged on the cover plate in an insulated manner.

11. The upper cover assembly as claimed in claim 10, wherein the through groove extends along a width direction of the cover plate, and a ratio of the length of the through groove to the width of the cover plate is (0.7:1)-(0.9:1).

12. A battery cell, wherein the battery cell comprises the upper cover assembly as claimed in any one of claims 10 to 11.

13. An electrical adapter, arranged on a pole of a square battery, wherein the electrical adapter is a cylinder, the cylinder comprises a side wall, a first end surface and a second end surface, and the side wall or the first end surface is at least provided with a through groove to mount a heat transfer tube.

14. The electrical adapter as claimed in claim 13, wherein a cross section of the through groove is C-shaped or U-shaped.

15. The electrical adapter as claimed in claim 13, wherein a surface of the through groove is provided with an insulated layer.

16. The electrical adapter as claimed in claim 13, wherein a distance between the lowest point of the through groove and the second end surface is 2-4 mm.

17. The electrical adapter as claimed in claim 13, wherein a ratio of the diameter of the heat transfer tube to the widest point of the through groove is (1:1.05)-(1:1.1).

18. The electrical adapter as claimed in claim 13, wherein the height of the electrical adapter is 11-18 mm.

19. The electrical adapter as claimed in claim 13, wherein the electrical adapter is provided with a fixing hole or a fixing groove at the lowest point of the through groove to fix the electrical adapter on the pole.

20. The electrical adapter as claimed in claim 19, wherein the electrical adapter is also provided with a welding groove and an avoidance groove, the welding groove extends along an axial direction of the lowest point of the through groove, and the avoidance groove is arranged along a circumferential direction of the fixing hole or the fixing groove.

21. The electrical adapter as claimed in claim 13, wherein the electrical adapter is also provided with an extension area extending horizontally along the second end surface.

22. A battery cell, comprising a pole, wherein the electrical adapter as claimed in any one of claims 13 to 21 is fixedly arranged on the pole.

23. The battery cell as claimed in claim 22, wherein the second end surface at least covers the pole, the electrical adapter and the pole are fixed by means of welding or screw connection, and the through groove extends along a thickness direction of the battery cell.

24. A battery pack, comprising a plurality of battery cells as claimed in any one of claims 12 and 22 to 23, and also comprising the heat transfer tube, wherein the heat transfer tube is fixedly arranged on the through groove, and the heat transfer tube is a heat tube or a liquid cooling tube.

25. An electrical adapter, the electrical adapter for a battery cell with a plurality of built-in pouch battery cores, wherein the electrical adapter comprises a base and a through groove, the base comprises a first electrical connection area and a second electrical connection area, the through groove is arranged on the first electrical connection area, the through groove is configured to fix a heat transfer tube, the first electrical connection area is configured to be electrically connected to a tab of a pouch battery core, and the second electrical connection area is configured to be electrically connected to an electrode plate of a battery pack.

26. The electrical adapter as claimed in claim 25, wherein the through groove is convexly arranged on the first electrical connection area, and the tab of the pouch battery core is fixed on a side facing away from the through groove.

27. The electrical adapter as claimed in claim 25 or 26, wherein the through groove comprises a pair of clamping teeth, an opening is arranged between the pair of clamping teeth, and a cross section of the through groove is C-shaped.

28. The electrical adapter as claimed in claim 27, wherein the pair of clamping teeth are provided with a platform at the opening so that the cross section of the through groove is Ω-shaped.

29. The electrical adapter as claimed in claim 25, wherein the through groove comprises a pair of clamping sheets, an end of the pair of clamping sheet close to the base is a clamping area, an end of the pair of clamping sheet away from the base is a locking area, the clamping area is configured to clamp the heat transfer tube, and the locking area is configured to lock and fix the pair of clamping sheet.

30. The electrical adapter as claimed in claim 29, wherein the locking areas of the pair of clamping sheets are fixed by riveting.

31. The electrical adapter as claimed in claim 25, wherein an insulated layer is arranged in the through groove.

32. A battery cell, wherein the battery cell comprises a plurality of pouch battery cores, and each tab of each of the plurality of pouch battery cores is electrically connected to an electrical adapter as claimed in any one of claims 25 to 31 correspondingly.

33. A battery pack, wherein the battery pack comprises a plurality of battery cells as claimed in claim 32, and also comprises a temperature control assembly, a positive plate and a negative plate, and the tab is electrically connected to the first electrical connection area of the electrical adapter; the temperature control assembly comprises a heat transfer tube, and the heat transfer tube is fixed on the through groove; and the positive plate and the negative plate are fixedly arranged on two sides of the battery pack, the second electrical connection area of the electrical adapter is electrically connected to the positive plate or the negative plate, and the heat transfer tube is a heat tube or a liquid cooling tube.

34. An electrical adapter, comprising a conductive block, wherein a top end of the conductive block is provided with at least one through groove, the at least one through groove is configured to mount a heat transfer tube, the heat transfer tube is a heat tube, the top end or a side surface of the conductive block is provided with a clamping groove, and the clamping groove is configured to mount an explosion venting plate.

35. The electrical adapter as claimed in claim 34, wherein a bottom end of the conductive block is provided with a pole mounting groove, the pole mounting groove is configured to cooperate with a pole of a square battery, the top end of the conductive block is also provided with a welding groove, and the welding groove is configured to be welded to the pole of the square battery.

36. The electrical adapter as claimed in claim 34, wherein the at least one through groove is an arc-shaped groove or an arch-shaped groove, configured to achieve close contact between the conductive block and the heat tube.

37. The electrical adapter as claimed in claim 34, wherein an end of the conductive block away from the clamping groove is provided with a mounting block, and the mounting block is configured to facilitate electrical connection of the conductive block.

38. An upper cover assembly, comprising a cover plate, a positive pole and a negative pole, the cover plate being provided with an explosion venting port, and an explosion venting film being arranged in the explosion venting port, wherein the upper cover assembly also comprises two electrical adapters as claimed in any one of claims 34 to 37, and the two electrical adapters are respectively integrated with the positive pole and the negative pole.

39. A battery pack, comprising an explosion venting plate, two conductive plates, N square batteries and 2N electrical adapters as claimed in any one of claims 34 to 37, wherein N is an integer greater than or equal to 2; the N square batteries are sequentially arranged, positive poles of the N square batteries are located on a first side of the N square batteries, and negative poles of the N square batteries are located on a second side of the N square batteries; N conductive blocks are sequentially arranged on the first side of the N square batteries, the N conductive blocks are electrically connected to the positive poles of the N square batteries respectively, the other N conductive blocks are sequentially arranged on the second side of the N square batteries, and the N conductive blocks are electrically connected to the negative poles of the N square batteries respectively; the two conductive plates are electrically connected to the N conductive blocks on the first side of the N square batteries and the N conductive blocks on the second side of the N square batteries respectively, so that the N square batteries are connected in parallel through the two conductive plates; through grooves of the N conductive blocks sequentially communicate with each other and are provided with at least one heat tube; and the explosion venting plate is inserted into clamping grooves of the 2N conductive blocks to form an explosion venting channel together with side walls of the 2N conductive blocks and cover plates of the N square batteries, and the explosion venting channel communicates with explosion venting ports of the N square batteries.

40. The battery pack as claimed in claim 39, wherein the explosion venting plate is a U-shaped explosion venting plate or a flat explosion venting plate, a side wall of the U-shaped explosion venting plate is respectively embedded in clamping grooves at top ends of the conductive blocks on the first side of the N square batteries and the conductive blocks on the second side of the N square batteries to form an explosion venting channel, or the flat explosion venting plate is respectively embedded in clamping grooves on side walls of the conductive blocks on the first side of the N square batteries and the conductive blocks on the second side of the N square batteries to form an explosion venting channel.

41. The battery pack as claimed in claim 40, wherein the conductive blocks are electrically connected to the positive poles and negative poles of the square batteries by welding, and the conductive plates are electrically connected to the conductive blocks or mounting blocks through bolts.

42. A battery pack, comprising an explosion venting plate, N-1 conductive plates, N square batteries and 2N electrical adapters as claimed in any one of claims 34 to 37, wherein N is an integer greater than or equal to 2; the plurality of square batteries are sequentially arranged, a positive pole of the i^{th} square battery is located on a first side, a negative pole of the i^{th} square battery is located on a second side, a negative pole of the i+1^{th} square battery is located on the first side, a positive pole of the i+1^{th} square battery is located on the second side, and i is a positive integer less than N; N conductive blocks are sequentially arranged on the first side of the N square batteries, the N conductive blocks are electrically connected to the positive poles or the negative poles of the N square batteries respectively, the other N conductive blocks are sequentially arranged on the second side of the N square batteries, and the N conductive blocks are electrically connected to the negative poles or the positive poles of the N square batteries respectively; contact surfaces of adjacent conductive blocks are insulated, and the N square batteries are connected in series through the N-1 conductive plates between the 2N conductive blocks; through grooves of the N conductive blocks sequentially communicate with each other and are provided with at least one heat tube, and an outer wall of the heat tube is provided with an insulated layer; and the explosion venting plate is inserted into clamping grooves of the 2N conductive blocks to form an explosion venting channel together with side walls of the 2N conductive blocks and cover plates of the N square batteries, and the explosion venting channel communicates with explosion venting ports of the N square batteries.

43. The battery pack as claimed in claim 42, wherein the explosion venting plate is a U-shaped explosion venting plate or a flat explosion venting plate, a side wall of the U-shaped explosion venting plate is respectively embedded in clamping grooves at top ends of the conductive blocks on the first side of the N square batteries and the conductive blocks on the second side of the N square batteries to form an explosion venting channel, or the flat explosion venting plate is respectively embedded in clamping grooves on side walls of the conductive blocks on the first side of the N square batteries and the conductive blocks on the second side of the N square batteries to form an explosion venting channel, the conductive blocks are electrically connected to the positive poles and negative poles of the square batteries by welding, and the conductive plates are electrically connected to the conductive blocks or mounting blocks through bolts.

44. An electrical adapter, comprising a busbar and a pole, wherein the busbar is provided with a plurality of first slots used for a tab of each pouch battery core in a battery pack to pass through and electrically connected to the busbar after contact; and the pole is arranged on an end surface of the busbar and is integrated with the busbar, and the pole is provided with a through groove for mounting a heat transfer tube.

45. The electrical adapter as claimed in claim 44, wherein the first slot is an open slot.

46. The electrical adapter as claimed in claim 45, wherein the plurality of first slots are arranged in parallel in a first area of the busbar, and the pole is arranged in a second area of the busbar; and the first area and the second area are two areas distributed along a length direction of the busbar, or the first area and the second area are two areas distributed along a width direction of the busbar.

47. An upper cover assembly, comprising a cover plate and two electrical adapters as claimed in any one of claims 44 to 46, wherein the cover plate is provided with at least two through holes; and poles of the two electrical adapters pass through the at least two through holes, and the cover plate and the two electrical adapters are arranged in an insulated manner.

48. The upper cover assembly as claimed in claim 47, wherein the upper cover assembly also comprises an insulated support arranged between the busbar and the battery pack, the insulated support is provided with a plurality of second slots for the tab of each pouch battery core in the battery pack to pass through.

49. The upper cover assembly as claimed in claim 48, wherein insulated clamping plates are arranged between the cover plate and the busbar, the insulated clamping plates are provided with positioning columns, the insulated support is provided with positioning holes cooperating with the positioning columns, a sealing rubber ring is arranged in the through hole of the cover plate and is configured to seal the joint between the pole and the cover plate, the pole is also sleeved with a welding ring on an outer side of the cover plate, the welding ring is welded to the pole, and simultaneously, the sealing rubber ring is tightly pressed.

50. A battery pack, comprising a plurality of pouch battery cores and the upper cover assembly as claimed in any one of claims 47 to 49, wherein positive tabs and negative tabs of the plurality of pouch battery cores respectively pass through first slots of two busbars and then are bent, and are respectively welded to the two busbars.
